# EUROPEAN PATENT APPLICATION

(11) **EP 4 686 999 A1**
(43) Date of publication of application: **04.02.2026**
(21) Application number: 25188415.1
(22) Date of filing: 09.07.2025
(51) Int. Cl.: G05D 1/24, G05D 1/661, G05D 101/20, G05D 105/22, G05D 107/80, G05D 109/30

(54) **SYSTEMS AND METHODS FOR AUTOMATICALLY IDENTIFYING AVAILABLE DOCKING POSITIONS USING A VISION SYSTEM OF A MARINE VESSEL**

(30) Priority: 29.07.2024 US 202418786781
(71) Applicant: BRUNSWICK CORPORATION, Mettawa, IL 60045 (US)
(72) Inventor: Singh, Rakshith Sudhir, Champaign, IL 61822 (US); Gosar, Jimit J., Aurora, IL 60502 (US)
(74) Representative: Sandersons

(57) **Abstract**

A system for automatically identifying available docking positions using a vision system of a marine vessel (10) is provided, the system comprising: an imaging device (72, 73, 74, 75, 76, 78), wherein the imaging device (72, 73, 74, 75, 76, 78) is configured to be mounted to the marine vessel (10) with an associated field of view (92, 93, 94, 95, 96, 98) of an environment (300, 320) of the marine vessel (10); and one or more hardware processors configured to: identify, based on image data captured using the imaging device (72, 73, 74, 75, 76, 78), a dock instance; determine, based on the image data, whether the dock instance is available for docking; indicate that the dock instance is an available docking position; and cause the marine vessel (10) to maneuver to the available docking position.

## Description

### FIELD

The present disclosure generally relates to systems and methods for automatically identifying available docking positions using a vision system of a marine vessel.

### BACKGROUND

U.S. Patent No. 11,702,178 discloses a marine propulsion system that includes at least one propulsion device and a user input device configured to facilitate input for engaging automatic propulsion control functionality with respect to a docking surface, wherein the user input device includes a direction indicator display configured to visually indicate a direction with respect to the marine vessel. A controller is configured to identify a potential docking surface, determine a direction of the potential docking surface with respect to the marine vessel, and control the direction indicator display to indicate the direction of the potential docking surface with respect to the marine vessel. When a user selection is received via the user input device to select the potential docking surface as a selected docking surface, and propulsion of the marine vessel is automatically controlled by controlling the at least one propulsion device to move the marine vessel with respect to the selected docking surface.

### SUMMARY

In accordance with some embodiments of the disclosed subject matter, a system for automatically identifying available docking positions using a vision system of a marine vessel is provided, the system comprising: an imaging device, wherein the imaging device is configured to be mounted to the marine vessel with an associated field of view of an environment of the marine vessel; and one or more hardware processors configured to: identify, based on image data captured using the imaging device, a dock instance; determine, based on the image data, whether the dock instance is available for docking; indicate that the dock instance is an available docking position; and cause the marine vessel to maneuver to the available docking position

In accordance with some embodiments of the disclosed subject matter, a system for automatically identifying available docking positions using a vision system of a marine vessel, the system comprising: a marine propulsion system comprising one or more propulsion devices; a display device; an input device; an imaging device, wherein the imaging device is configured to be mounted to the marine vessel with an associated field of view of an environment of the marine vessel; and one or more hardware processors configured to: capture an image using the imaging device; provide the image to a trained object detection model, wherein the trained object detection model is trained to identify instances of objects in image data corresponding to a plurality of classes, including a dock class; receive, from the trained object detection model, a dock bounding box indicative of a location and size of a dock instance in the image; provide the image data to a trained image segmentation model, wherein the trained image segmentation model is trained to classify each portion of image data as corresponding to a class of a second plurality of classes, including a water class; receive, from the trained image segmentation model, segmentation information indicative of a portions of the image classified as water; determine that no more than a threshold portion of the dock bounding box overlaps a bounding box of a different class of the plurality of classes; determine, based on the dock bounding box and the segmentation information, that the dock instance is unoccupied; present, using the display device, a graphical user interface that includes a model of the marine environment and a selectable user interface element corresponding to the dock instance; receive, via the input device, a selection of the selectable user interface element; and in response to selection of the selectable user interface element, control the marine propulsion system to automatically maneuver the marine vessel to dock at the dock instance without further user intervention

In some embodiments, the imaging device comprises a stereoscopic camera.

In some embodiments, the one or more hardware processors are further configured to: provide the image data to a trained object detection model, wherein the trained object detection model is trained to identify instances of objects in input image data corresponding to a plurality of classes, including a dock class; receive, from the trained object detection model, object detection information indicative of a location and size of the dock instance; and identify the dock instance based on the object detection information

In some embodiments, the one or more hardware processors are further configured to: provide the image data to a trained image segmentation model, wherein the trained image segmentation model is trained to classify each portion of input image data as corresponding to a class of a plurality of classes, including a dock class; receive, from the trained image segmentation model, segmentation information indicative of a location and size of the dock instance; and identify the instance dock based on the segmentation information

In some embodiments, the one or more hardware processors are further configured to: identify, based on the image data captured using the imaging device, a second dock instance; determine whether a dock bounding box associated with the dock instance overlaps one or more non-dock bounding boxes associated with one or more non-dock objects by at least a threshold amount; and in response to determining that the dock bounding box overlaps one or more non-dock bounding boxes by at least the threshold amount, determine that the second dock instance is not available for docking

In some embodiments, the one or more hardware processors are further configured to: determine whether an amount of open water near the dock instance is sufficient for docking the marine vessel; and in response to determining that the amount of open water near the dock instance is sufficient for docking the marine vessel, determine that the dock instance is available for docking

In some embodiments, the one or more hardware processors are further configured to: identify a portion of image data within a dock bounding box associated with the dock instance classified as water in segmentation information; determine whether the portion classified as water exceeds a threshold portion of the dock bounding box; and in response to determining that the portion classified as water exceeds the threshold portion of the dock bounding box, determine that the amount of open water near the dock instance is sufficient for docking the marine vessel

In some embodiments, the one or more hardware processors are further configured to: label a portion of a model of the marine environment adjacent to the dock instance as available for docking, wherein the portion of the model comprises a portion of the image data that is classified as water and within a dock bounding box associated with the dock instance; and indicate that the dock instance is an available docking position based on the labeled portion of the model

In some embodiments, the model comprises an occupancy grid.

In some embodiments, the one or more hardware processors are further configured to: cause a graphical user interface to be presented that includes a user interface element that represents a location of the available docking position with respect to a portion of a dock in the environment that corresponds to the dock instance; receive, via the graphical user interface, input that causes the available docking position to be selected as a target docking position; and in response to receiving the input that causes the available docking position to be selected, cause the marine vessel to maneuver to the target docking position

In some embodiments, the system further comprises: a marine propulsion system comprising one or more propulsion devices, wherein the one or more hardware processors are further configured to: receive an indication that the available docking position has been selected as a target docking position; determine a path to the target docking position; determine marine vessel movements to cause the marine vessel to travel along the path; and output the marine vessel movements to the marine propulsion system, thereby causing the marine propulsion system to actuate the one or more propulsion devices to propel the marine vessel to the available docking location without further intervention from an operator of the marine vessel

In accordance with some embodiments of the disclosed subject matter, a method for automatically identifying available docking positions using a vision method of a marine vessel is provided, the method comprising: identifying, based on image data captured using an imaging device, a dock instance, wherein the imaging device is configured to be mounted to the marine vessel with an associated field of view of an environment of the marine vessel; determining, based on the image data, whether the dock instance is available for docking; indicating that the dock instance is an available docking position; and causing the marine vessel to maneuver to the available docking position.

Various other features, objects, and advantages of the disclosed subject matter can be more fully appreciated with reference to the following description taken together with the drawings.

### BRIEF DESCRIPTION OF THE DRAWINGS

The present disclosure is described with reference to the following drawings.
FIG. 1 shows an example of a schematic representation of a propulsion system on a marine vessel in accordance with some embodiments of the disclosed subject matter.
FIG. 2 shows an example of hardware that can be used to implement an imaging device, and a control system in accordance with some embodiments of the disclosure.
FIGS. 3A1 to 3A4 show an example of a marine environment in which a marine vessel can execute a process for automatically identifying available docking positions using a vision system of a marine vessel in accordance with some embodiments of the disclosed subject matter.
FIGS. 3B1 to 3B4 show another example of a marine environment in which a marine vessel can execute a process for automatically identifying available docking positions using a vision system of a marine vessel in accordance with some embodiments of the disclosed subject matter.
FIG. 4 shows an example of a process for automatically identifying available docking positions using a vision system of a marine vessel in accordance with some embodiments of the disclosed subject matter.
FIG. 5 shows an example of a process for identifying relevant objects and classifying portions of images of a marine environment in accordance with some embodiments of the disclosed subject matter.
FIG. 6 shows an example of a process for identifying whether a docking position is available in accordance with some embodiments of the disclosed subject matter.
FIG. 7 shows an example of an image and classification information generated based on the image in accordance with some embodiments of the disclosed subject matter.

### DETAILED DESCRIPTION

Properly identifying available docking positions (e.g., at docks) can be difficult, as it can require identifying not only a dock, but determining that an area of water adjacent to the dock is unoccupied. Additionally, relatively long, straight structures can be identified using a relatively simple 2D model of the environment around a vessel (e.g., an occupancy grid), and a user can be permitted to select such as structure as a docking location. However, this can also allow a user to select another type of long straight structure that may not be suitable for docking, such as a barge or retaining wall, rather than a dock.

In some embodiments, mechanisms described herein can use a combination of image segmentation information and object detection information to identify docking positions that are likely to be available. For example, as described below, mechanisms described herein can identify docks in image data captured by an imaging device (e.g., a camera) mounted to a marine vessel using an object detection model, and can identify water near the dock using an image segmentation model (e.g., water that is within a bounding box for the dock, and not within another bounding box). In such an example, if the amount of open water near the dock is sufficient, the dock position corresponding to the open water can be identified as an available docking position.

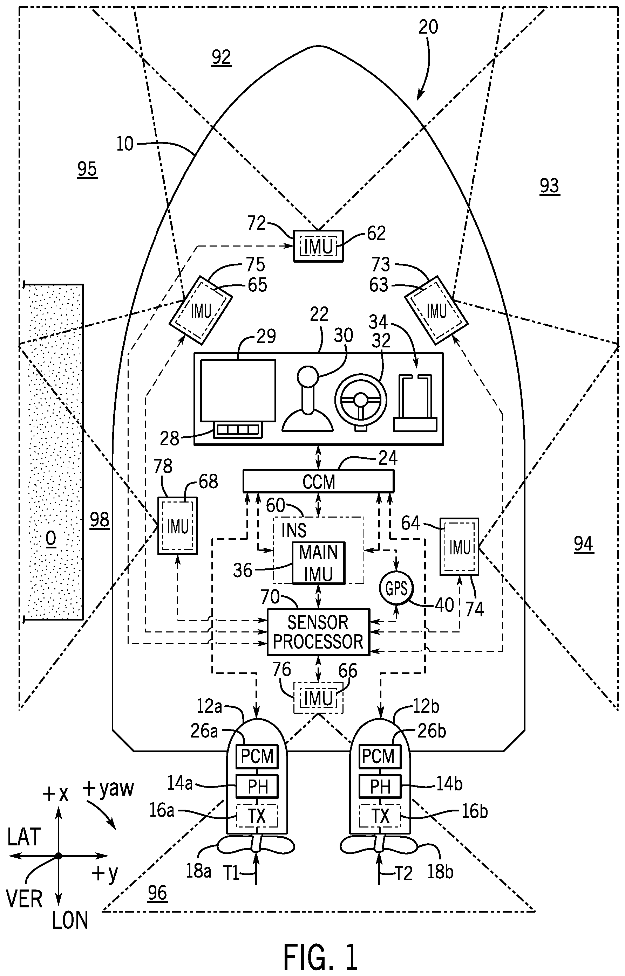

FIG. 1 shows an example of a schematic representation of a propulsion system on a marine vessel in accordance with some embodiments of the disclosed subject matter. FIG. 1 shows a marine vessel 10 equipped with a propulsion system 20 on marine vessel 10 configured in accordance with some embodiments of the disclosed subject matter. In some embodiments, propulsion system 20 can be configured to operate, for example, in a joysticking mode in which a joystick is operated by a user to control vessel movement within an x/y plane, among other modes (e.g., as described hereinbelow). In some embodiments, propulsion system 20 can include first and second propulsion devices 12a, 12b that produce first and second thrusts T1, T2 to propel the vessel 10. First and second propulsion devices 12a, 12b are illustrated as outboard motors, but can alternatively be inboard motors, stern drives, jet drives, pod drives, any other suitable propulsion device, or combinations thereof. Each propulsion device can be provided with an engine 14a, 14b operatively connected to a transmission 16a, 16b, in turn, operatively connected to a propeller 18a, 18b.

In some embodiments, vessel 10 can also house various control elements that comprise part of the marine propulsion system 20. For example, marine propulsion system 20 can comprise an operation console 22 in signal communication (e.g., via a controller area network (CAN) bus) with a controller 24, such as a command control module (CCM), and with propulsion control modules (PCM) 26a, 26b associated with the respective propulsion devices 12a, 12b. Each of controller 24 and PCMs 26a, 26b can include memory and a programmable processor. For example, each control module 24, 26a, 26b can include one or more processors communicatively connected to a respective storage system comprising a computer-readable medium that includes volatile and/or nonvolatile memory upon which computer-readable code and data can be stored. Additionally or alternatively, in some embodiments, a processor(s) of one or more of control modules 24, 26a, 26b can be communicatively connected to a shared storage system comprising a computer-readable medium that includes volatile and/or nonvolatile memory upon which computer-readable code and data can be stored.

Note that although mechanisms described herein are generally described in connection with an internal combustion engine (ICE) propulsion system that includes a powerhead implemented using an ICE engine, mechanisms described herein can be used in connection with a propulsion system that includes any other suitable powerhead(s), such as one or more electric motors, or any suitable combination of powerheads. For example, propulsion devices 12a, 12b can be replaced by, or used in combination with, one or more propulsion devices that produce thrust to propel vessel 10 using an electric motor, such as an electric outboard motor, electric inboard motor, electric stern drive, electric jet drive, electric pod drive, any other suitable propulsion device, or combinations thereof, that is implemented using an electric motor (e.g., which can be implemented as a motor that is directly connected to a propulsor shaft without a transmission, such as transmission 16a, 16b). Additionally, although mechanisms described herein are generally described in connection with a propulsion system that uses two propulsion devices positioned at a stern of the vessel, fewer or more propulsion devices can be provided (e.g., including a single ICE propulsion device) in any suitable position(s).

In some embodiments, operation console 22 can include any suitable number of user input devices, such as, a keypad 28, a joystick 30, a steering wheel 32, one or more throttle/shift levers 34, etc., and any suitable number of output devices, such as a display 29, one or more speakers (not shown; e.g., a conventional speaker(s), an underwater speaker(s), etc.), one or more sound producing devices (e.g., an air horn(s), a bell(s), a whistle(s), etc.), etc. In some embodiments, each of the input devices can be configured to input commands to controller 24, which can, in turn, communicate control instructions to first and second propulsion devices 12a, 12b by communicating with PCMs 26a, 26b. In some embodiments, steering wheel 32 and throttle/shift lever(s) 34 can function in a conventional manner, such that rotation of steering wheel 32, for example, is detected by a sensor(s) (e.g., a potentiometer, a hall effect sensor, etc.), which produces a signal that is provided to controller 24 regarding a desired direction of the vessel 10. Controller 24 can, in turn, send signals to PCMs 26a, 26b (and/or a thrust vector module(s) (TVMs), or additional modules if provided), which in turn can activate steering actuators to achieve desired orientations of propulsion devices 12a, 12b. In some embodiments, propulsion devices 12a, 12b can be independently steerable about a respective steering axis. Throttle/shift lever(s) 34 can send signals to controller 24 regarding a desired gear (e.g., forward, reverse, or neutral) of transmissions 16a, 16b and desired rotational speed (and/or any other value indicative of a thrust command) of engines 14a, 14b of propulsion devices 12a, 12b. Controller 24 can, in turn, send signals to PCMs 26a, 26b, which in turn activate electromechanical actuators in transmissions 16a, 16b and engines 14a, 14b for shift and throttle, respectively. A manually operable input device that facilitates control along multiple degrees of freedom, such as joystick 30, can also be used to provide signals to controller 24. In some embodiments, joystick 30 can be used to allow an operator of vessel 10 to manually maneuver vessel 10 along a particular degree of freedom, such as to achieve lateral translation or rotation of vessel 10, or along multiple particular degrees of freedom, such as to achieve translation along a direction other than fore or aft (e.g., a direction not aligned with a heading of the vessel) or simultaneous translation and rotation of vessel 10. For example, joystick 30 can be used to allow an operator of vessel 10 to maneuver vessel 10, such as to achieve isolated movement in a ±x direction (e.g., translational movement in a forward or backward direction), a ±y direction (e.g., translational movement in a lateral direction to starboard or port), and/or a ±yaw direction (e.g., rotational movement to starboard or port). In a more particular example, joystick 30 can be used to allow an operator of vessel 10 to maneuver vessel 10 to achieve lateral translation of vessel 10 (e.g., movement along the ±y direction, without movement along the ±x or ±yaw directions), rotation of the vessel 10 (e.g., movement along the ±yaw direction, without movement along the ±x or ±y directions), or combinations of such maneuvers (e.g., movement along the ±y while simultaneously rotating around the ±yaw direction, without movement along the ±x direction).

In some embodiments, output devices, such as display 29, speakers, etc., can be configured to present (e.g., visually, audibly, etc.) any suitable data, information, image data (e.g., images captured by one or more devices that include an image sensor(s)), received from controller 24, from another controller or processor, and/or generated based on data and/or information received from controller 24, another controller, and/or processor. In some embodiments, display 29 can be any suitable display, such as a multi-function display (MFD). In some embodiments, display 29 can be used to present a user interface, which can be implemented as a touchscreen or display that is capable of receiving input via a touchscreen. Additionally or alternatively, in some embodiments, one or more other input devices can be used to interact with a user interface (e.g., a graphical user interface) presented by display 29, such as a keypad (e.g., keypad 28), a keyboard, a track ball, a track pad, any other suitable user input device, and/or suitable combination of user input devices. In some embodiments, vessel 10 can include multiple displays 29, which can be integrated into operation console 22, integrated into another portion of vessel 10, and/or mechanically mounted to operation console 22 or another portion of vessel 10. In some embodiments, display 29 can be used to present alerts, menus, operational data (e.g., throttle, speed, heading, engine output, etc.), maps, charts, settings that can be used to configure another display, etc. In some embodiments, display 29 can be omitted. For example, where a mobile device, such as a tablet computer, laptop computer, head-mounted display, etc. is configured to present a user interface of vessel 10.

In some embodiments, propulsion system 20 can also include one or more imaging devices 72, 73, 74, 75, 76, and 78, which can be implemented using any suitable imaging device. For example, in some embodiments, one or more of imaging devices 72-78 can be implemented using a two-dimensional (2D) imaging device, such as a digital camera having an image sensor (e.g., a color image sensor and/or monochrome image sensor) implemented using a conventional digital image sensor (e.g., a CMOS image sensor, a CCD image sensor). Such an imaging device can be configured to generate 2D images (e.g., color images, monochrome images, etc.) of a portion of an environment of the marine vessel that is within a field of view of the imaging device (e.g., partial FOVs 92, 93, 94, 95, 96, and 98 shown in FIG. 1, associated with imaging devices 72, 73, 74, 75, 76, and 78 respectively). Additionally or alternatively, in some embodiments, one or more of imaging devices 72-78 can be implemented using a depth sensing device, such as a 3D camera, which can be used to determine a three-dimensional location of an object and/or other feature of an environment (e.g., a water surface) that is within a field of view of the depth sensing device (e.g., partial FOVs 92, 93, 94, 95, 96, and 98) with respect to the location of the depth sensing device (e.g., distance to various points on an object and a direction associated with each of the various points).

In some embodiments, imaging devices 72-78 can form a portion of a vision system associated with vessel 10 (although the vision system may be configured to use sensing modes other than visible light, such as sound-based sensing, radio-based sensing, infrared-based sensing, etc.). Although a limited number of imaging devices are shown (e.g., one perpendicular to each of the bow, stern, and port and starboard sides the vessel 10, and two positioned at an angle between the bow and sides), fewer or more sensors can be provided at each location and/or provided at other locations, such as on a hardtop of vessel 10. In some embodiments, imaging devices 72-78 can be used to determine a three-dimensional location of an object and/or other feature of an environment (e.g., a water surface) that is within a field of view of the imaging device. For example, imaging devices 72-78 can be implemented using one or more of depth cameras (e.g., implemented using stereoscopic imaging techniques, structured light imaging techniques, indirect time-of-flight imaging techniques such as continuous-wave time-of-flight, direct time-of-flight imaging techniques, etc.), three-dimensional laser range finders (e.g., implemented using light detection and ranging (lidar) techniques), radars, sonars, and/or other devices individually capable of determining both the distance and direction to points on an object and/or other feature relatively accurately (e.g., on the order of several to tens of centimeters (cm) at relatively close ranges on the order of several to tens of meters, such as an accuracy of about +/- 3 cm at 5 meters (m) and +/-13 cm at 10 m for stereoscopic cameras), e.g., the relative position of various points on an object O (such as a dock, a seawall, a slip, another vessel, a person, a portion of a bridge, a portion of a dam, a relatively large rock, a tree, etc.) with respect to each imaging device 72-78 having a field of view that includes object O. In some embodiments, a 3D location of object O and/or various points on object O with respect to vessel 10 can be determined (e.g., by a sensor processor 70) using the location of object O and/or various points on object O determined by one or more of imaging devices 72-78. Note that, as described above, one or more of imaging devices 72-78 (and/or any other imaging devices) can be implemented as a 2D digital camera that is not configured to generate depth information. Additionally, in some embodiments, one or more of imaging devices 72-78 can be omitted and/or one or more additional imaging devices can be included (e.g., having a different FOV).

In some embodiments, a calibration process can be performed to determine a set of transforms that can be used to convert a location from a local coordinate system used by a particular imaging device (sometimes referred to herein as a camera coordinate system, although it can be a coordinate system used by another type of sensing device, such as a lidar or sonar-based sensor) to the corresponding location in a global coordinate system used by vessel 10 (e.g., used to perform autonomous navigation processes, such as automatically guiding vessel 10 during docking, automatically guiding vessel 10 during trailer loading or unloading, automatically avoiding collisions with objects via a virtual bumper or buffer zone, autonomous navigation through areas that may include other vessels and/or other obstacles, etc.). The camera coordinate system can define a local reference frame for a particular camera (or other type of imaging device), and the global coordinate system can define a reference frame to which each camera (or other type of imaging/sensing device) is calibrated, which can be referred to as a common reference frame, a global reference frame, or a world reference frame (note that the global coordinate system can be independent and distinct from the geographical coordinate system of latitude and longitude often used to designate locations on Earth). In some embodiments, the global coordinate system can generally coincide with the vessel 10. For example, X and Y axes of the global coordinate system can be aligned with a longitudinal axis, x, and a latitudinal axis, y, of vessel 10, respectively, and a Z axis can be aligned with an axis, z, that is orthogonal to the x and y axes).

Autonomous and/or advanced operator assistance (sometimes referred to as semi-autonomous) controls for improved vessel handling qualities generally requires a relatively accurate ability to identify objects in an environment of vessel 10, often using multiple imaging devices (e.g., potentially including any suitable types of depth sensors and/or proximity sensors) mounted on vessel 10. In general, such imaging devices can be positioned to detect objects in the marine environment surrounding marine vessel 10, such as a dock, a mooring ball, a trailer, another vessel, a wave(s), a floating object(s), a marker (e.g., an aid to navigation), or other object in environment, in the current path, and/or in other potential paths of vessel 10. In some embodiments, each imaging device can provide location information of features within its field of view relative to its own frame of reference (e.g., in the camera coordinate system associated with that imaging device) and/or in a common frame of reference (e.g., in the global coordinate system). For example, the location information can be transformed from the respective camera coordinates at the camera (or other imaging device) and/or at a controller (e.g., sensor processor 70) using one or more transforms derived during a calibration procedure. Depending on the type of imaging device(s), the application of use, boat size, hull shape, etc., multiple sensor types and sensor locations may be required to provide adequate sensing around the marine vessel for operation in all marine environments.

In some embodiments, vessel 10 can have a main inertial measurement unit (IMU) 36 installed at a known location on the marine vessel. Referencing the example in FIG. 1, main IMU 36 can be part of an inertial navigation system (INS) such as including one or more micro-electro-mechanical systems (MEMS). For example, INS 60 can include a MEMS angular rate sensor, such as a rate gyro, a MEMS accelerometer, and a magnetometer that provides 3D orientation of vessel 10 by integrating gyroscopic measurements, accelerometer data, and/or magnetometer data. Additionally or alternatively, in some embodiments, motion and/or changes in angular position (e.g., including pitch, roll, and/or yaw) can be sensed using an attitude heading reference system (AHRS) that provides 3D orientation information of vessel 10. In some embodiments, one or more IMUs of vessel 10 (e.g., IMU 36) can be included as part of an INS or AHRS. In some embodiments, controller 24, and/or an INS or AHRS can receive orientation information from IMU 36 and can also receive information from GPS receiver 40 comprising part of a satellite-based radio navigation system (e.g., a global navigation satellite system (GNSS)), such as the global positioning system (GPS). GPS receiver 40 can be located at a pre-selected fixed position on vessel 10, which provides information related to a position of vessel 10 with respect to a planetary frame of reference (e.g., latitude, longitude, and height with respect to sea level). In some embodiments, main IMU 36 can also be located at a known and fixed position with respect to the center of rotation (COR) and/or center of gravity (COG) of vessel 10 (e.g., a COG when the vessel is empty).

In some embodiments, IMU data from each sensor IMU 62-68 and/or main IMU 36 can be provided to sensor processor 70 and/or to another controller (e.g., CCM 24, etc.). In some embodiments, as shown in FIG. 1, image data, depth data, and/or IMU data can be communicated to sensor processor 70 (and/or any other suitable controller), which can be via any suitable wired or wireless communication technique(s), such as via a dedicated communication bus (e.g., an Ethernet bus), wireless transmission protocols (e.g. Bluetooth, Bluetooth Low Energy (BLE), ZigBee, ultra-wideband, etc.), a CAN bus comprising part of the vessel network, etc. Note that the dashed connection lines in FIG. 1 are meant to show only that the various control elements are capable of communicating with one another, and do not necessarily represent actual wiring connections between the control elements, nor do they represent the only possible paths of communication between the elements. In some embodiments, INS 60, one or more IMUs (e.g., IMUs 62-68), etc., can be omitted (e.g., where imaging devices do not include an IMU, where vessel 10 is not configured with relatively expensive sensors such as an INS, etc.).

In some embodiments, some sensor processing functions can be performed by a separate computing device. For example, sensor processor 70 can communicate processed sensor data to controller 24, which can utilize the processed data for navigation functions and/or other vessel control functions. In some embodiments, sensor processor 70 can be associated with its own storage system comprising memory and its own processing system that executes programs and accesses data stored in the memory of sensor processor 70. Additionally or alternatively, in some embodiments, one or more functions described as being performed by sensor processor 70 can be incorporated in a multi-purpose controller, such as sensor processor software stored and executed within controller 24. For example, in some embodiments, controller 24 can control marine vessel navigation, such as path planning, autonomous point-to-point navigation, automatic docking, or other advanced operator assistance programs. In some embodiments, controller 24 can also perform one or more sensor processing functions. Additionally or alternatively, in some embodiments, functions described herein as comprising part of sensor processor functions can be distributed across two or more processing devices. For example, each imaging device 72-78 can include one or more processors that are configured to perform certain functions (e.g., performing object detection to classify one or more objects in the image, segmenting image data to classify one or more objects in the image, segmenting image data to identify portions of an image that correspond to a particular object or type of object, generating one or more bounding boxes, performing pose estimation of one or more objects in the image data, adjusting a perspective of an image, generating one or more RGBD images, generating one or more 3D depth maps, generating a point cloud corresponding to the 3D depth map, projecting points into a global coordinate system, etc.). As another example, each IMU 62-68 can include (or otherwise be associated with) one or more processors that are configured to perform calculations to interpret measured IMU data (such as to determine an attitude estimate for the respective IMU) and provide the interpreted IMU data to one or more other processing devices or controllers for execution of subsequent processing. In some embodiments, sensor processor 70 can be omitted (e.g., where sensor processing is performed by another controller, such as controller 24).

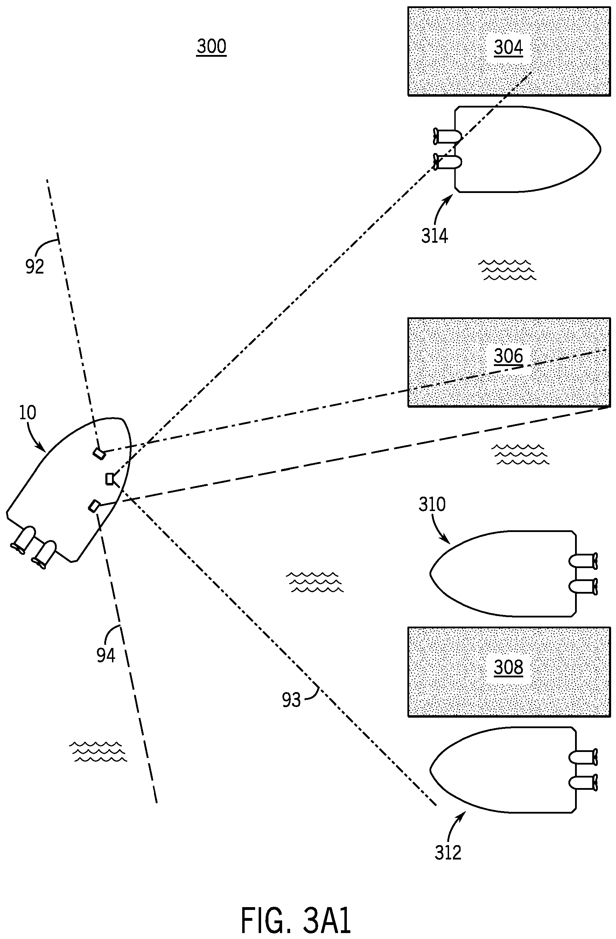

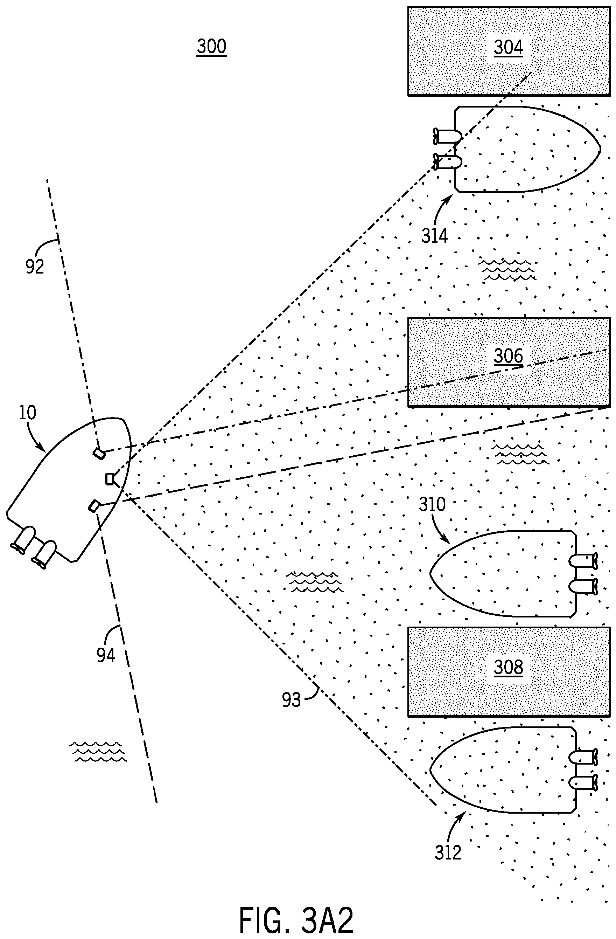

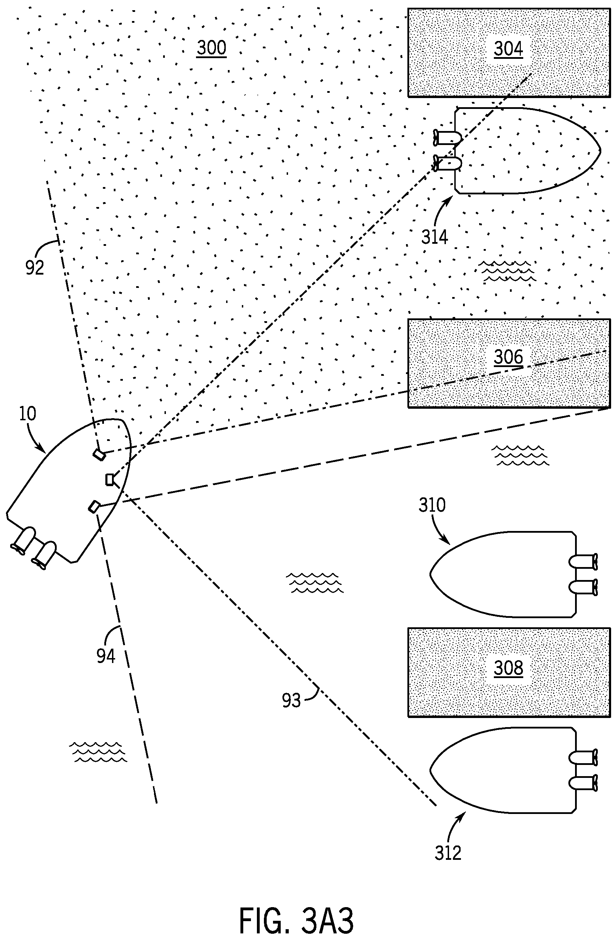

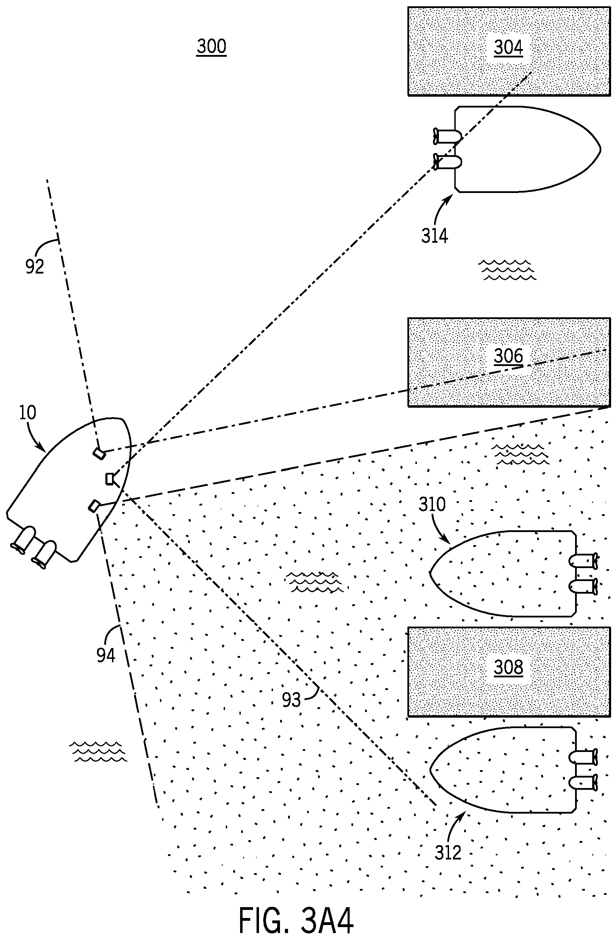

In some embodiments, sensor processor 70 can be programmed and/or otherwise configured to identify objects (e.g., using object detection, image segmentation, etc.) in an environment of marine vessel 10, determine whether a dock is present, determine whether a docking position is available at the dock, facilitate selection of an available docking location. In some embodiments, processors of vessel 10, such as sensor processor 70, can access computer-readable code and, upon executing the code, carry out one or more functions, such as object identification, image segmentation, analysis of potential docking positions, and presentation of a user interface that presents available docking locations (e.g., as described below in connection with FIGS. 3A1 to 7).

In some embodiments, a controller(s) (e.g., controller 24, sensor processor 70, etc.) can use any suitable information about the environment when planning a path for autonomous, semi-autonomous, or manual navigation. For example, as described below, the controller(s) can use object detection and/or object interpretation information that has been generated using image data captured using an imaging device (e.g., one or more of imaging devices 72-78). As another example, the controller(s) can use an occupancy grid that has been generated and/or updated using proximity information measured by proximity sensors (e.g., imaging devices 72-78 implemented using depth sensors, such as stereoscopic cameras). In some embodiments, the occupancy grid can be formatted as a data structure in which each element corresponds to a cell of the occupancy grid, and each element is indicative of a probability that the cell is occupied by an object/obstacle. In some embodiments, a controller(s) (e.g., controller 24, sensor processor 70, etc.) can use a current context to identify one or more constraints on maneuvers that are indicated by objects in the environment. For example, as described below in connection with FIGS. 3A1 to 6, a vision system can be used to identify potential docking positions, and determine which of the potential docking locations are likely to be available and which are likely occupied. In such an example, the controller can constrain the vessel from docking at potential docking positions that are determined to be occupied, though at least a portion of such a docking position may be included in, or close to, a planned navigation path (e.g., if at least a portion of such a docking position is not occupied by an object).

In some embodiments, information indicating a probability of an object being located in a particular portion of image data and/or a model of the environment can be based on any suitable information. For example, image data (e.g., pixel values) and/or location information (e.g., based on measurements by one or more of imaging devices 72-78) can be correlated with feature label information that identifies a classification of a feature. In some embodiments, the label information can be generated using any suitable technique or combination of techniques. For example, one or more images of an environment (e.g., color images) can be captured, and can be used to generate segmentation information (e.g., using a trained machine learning model), which can include classification information that indicates which of a set of classes different portions of the image are most likely to correspond. As another example, one or more images of an environment can be captured, and can be used to generate object detection information (e.g., using a trained machine learning model), which can include classification information that indicates which of a set of classes particular portions of the image are most likely to correspond (e.g., instances of a particular class of the set of classes). As yet another example, one or more images of an environment can be captured, and can be used to generate image segmentation (e.g., via semantic segmentation) and object detection information (e.g., via instance segmentation), which can include classification information that indicates which of a set of classes particular portions of the image are most likely to correspond (e.g., grouped as instances of a particular class of the set of classes). As a more particular example, a trained panoptic image segmentation machine learning model can be used to concurrently generate semantic and instance segmentation information.

In some embodiments, classification information associated with objects in the environment can be associated with portions of a model used to represent the environment. For example, points in a point cloud can be assigned a label based on a classification of an object at that position (e.g., based on image segmentation information, and/or object detection information). Additionally, in some embodiments, the classification information can include a confidence that the label is accurate (e.g., a probability of the portion of the image being an instance of the class corresponding to the label). In some embodiments, such a label can be used to determine a likelihood that a particular type of object is located at different positions in the environment and/or image data.

In some embodiments, mechanisms described herein can use a trained machine learning model that is trained to predict to which class of a set of classes features of the image are most likely to correspond (e.g., a model trained to perform image segmentation, a model trained to perform object recognition and/or detection, etc.), in which a subset of classes are objects that convey meaning relevant to operation of a marine vessel. In some embodiments, segmentation information can include classification information that indicates which of a set of classes different portions of the image are most likely to correspond (e.g., each pixel can be associated with a classification). In some embodiments, the set of classes can include classes that are relatively likely for the vessel to encounter (e.g., in a marine environment). For example, the set of classes can include one or more classes of bodies of water, such as one or more broad class of water feature, and/or multiple more specific classes of water features. As another example, the set of classes can include one or more classes of vessel, such as one or more broad class of vessel feature (e.g., vessel, boat, motor vehicle, etc.), and/or multiple more specific classes of vessel features (e.g., boat, large boat, small boat, personal watercraft or more specific classes such as jet ski, sail boat, human-powered watercraft or more specific classes such as: canoe; kayak; or standup paddle board, etc.). In such an example, the segmentation information can include a class corresponding to features of the vessel associated with the camera(s) that captures the image (e.g., an ego vessel class). As yet another example, the set of classes can include one or more classes of markers that convey meaning relevant to operation of a marine vessel (e.g., aids to navigation, informational signs, etc.), such as one or more broad classes of aid to navigation features and/or marker features (e.g., an aid to navigation class, a marker class, etc.), and/or multiple more specific classes of aid to navigation features (e.g., channel marker, buoy, beacon, sign, specific types of signs, etc., which may or may not include a regulatory mark(s)). As still another example, the set of classes can include one or more classes of structure, such as one or more broad class of structural feature (e.g., structure), and/or multiple more specific classes of structural features (e.g., dock, bridge, building, sea wall or more specific classes such as concrete sea wall or rock sea wall, etc.). As a further example, the set of classes can include one or more classes of vegetation, such as one or more broad class of vegetation feature, and/or multiple more specific classes of vegetation features (e.g., trees, brush, algae, etc.). As another further example, the set of classes can include one or more classes of open space and/or land, such as one or more broad class of sky feature and/or land feature, and/or multiple more specific classes of sky features and/or specific classes of land.

Additionally, in some embodiments, object detection information can include classification information that indicates which of a set of classes an object in the image is most likely to correspond (e.g., each detection of an object can be associated with a portion of an image, such as a group of pixels within a bounding box). In some embodiments, the set of object detection classes can include classes of objects that are relatively likely for the vessel to encounter (e.g., in a marine environment). For example, the set of object detection classes can include one or more classes of vessel, such as one or more broad class of vessel feature (e.g., vessel, boat, motor vehicle, etc.), and/or multiple more specific classes of vessel features (e.g., boat, large boat, small boat, personal watercraft or more specific classes such as jet ski, sail boat, human-powered watercraft or more specific classes such as: canoe; kayak; or standup paddle board, etc.). As another example, the set of classes can include one or more classes of markers that convey meaning relevant to operation of a marine vessel (e.g., aids to navigation, informational signs, etc.), such as one or more broad classes of aid to navigation features and/or marker features (e.g., an aid to navigation class, a marker class, etc.), and/or multiple more specific classes of aid to navigation features (e.g., channel marker, buoy, beacon, sign, specific types of signs, etc., which may or may not include a regulatory mark(s)). As yet another example, the set of classes can include one or more classes of structure, such as one or more broad class of structural feature (e.g., structure), and/or multiple more specific classes of structural features (e.g., dock, bridge, building, sea wall or more specific classes such as concrete sea wall or rock sea wall, etc.).

In some embodiments, as vessel 10 traverses a path (e.g., a path planned by the controller(s), a current path set by an operator, etc.), a controller(s) can periodically (e.g., at regular and/or irregular intervals) project a model of vessel 10 forward along the path a predetermined distance to determine whether vessel 10 is likely to collide with any obstacles that may have obstructed the planned path (and/or that a sensor(s) may have detected the presence of) since the path was planned, and/or enter an area in which operation is restricted (e.g., based on meaning conveyed by an object in the environment, based on a class of an object in/near the area, such as a vessel, swimmer, etc.). For example, at a predetermined rate (e.g., once per second, twice per second, etc.), the controller(s) can determine whether a cell of the occupancy grid which vessel 10 (e.g., including a buffer area) is predicted to traverse is occupied.

In some embodiments, each processor (e.g., sensor processor 70, a processor of one or more of control modules 24, 26a, 26b) can access computer-readable code and, upon executing the code, carry out one or more functions, such as object detection functions, image segmentation functions, autonomous navigation functions, semi-autonomous navigation functions, etc., as described in more detail below. In some embodiments, sensor processor 70 can be a dedicated, special-purpose computing system configured to process data from an imaging device(s), an IMU(s), and/or any other suitable data sources (e.g., an INS, a GPS receiver, etc. For example, sensor processor 70 can be configured to process image data and/or depth data received from an imaging device(s) (e.g., imaging devices 72-78 implemented using depth sensors, such as stereoscopic cameras) to generate suitable image data and/or depth data, to perform an object detection task(s) to generate classification information, to perform an image segmentation task(s) to generate classification information, to identify whether any dock objects are included in image data received from an imaging device(s) based on the classification information, to determine whether a docking position is available based on classification information, interact with a user and/or autonomy system to select an available docking position as a target docking position, to perform a mode and/or state determination task(s), to perform an autonomous navigation task(s), to perform a semi-autonomous navigation task(s), etc.

In some embodiments, mechanisms described herein can be configured to use information from one or more of imaging devices 72-78 to generate image data and/or depth data for at least a portion of a marine environment, to classify portions of the image data and/or depth data (e.g., using object detection and/or image segmentation techniques), identify whether any dock positions in the marine environment are available using classification information, and select a target docking location (e.g., via interaction with a user and/or via an autonomy system). For example, mechanisms described herein can use techniques described below in connection with FIGS. 3A1 to 7, identify available docking positions in a marine environment for a marine vessel in the marine environment.

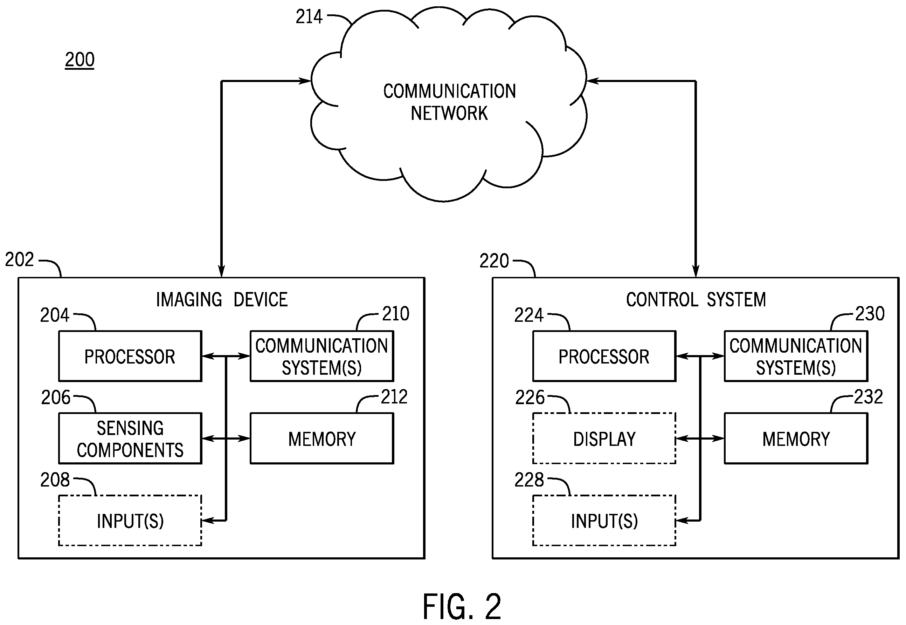

FIG. 2 shows an example of hardware 200 that can be used to implement an imaging device 202, and a control system 220 in accordance with some embodiments of the disclosed subject matter.

As shown in FIG. 2, in some embodiments, imaging device 202 can include a processor 204, sensing components 206, one or more inputs 208, one or more communication systems 210, and/or memory 212. In some embodiments, processor 204 can be any suitable hardware processor or combination of processors, such as a central processing unit (CPU), an accelerated processing unit (APU), a graphics processing unit (GPU), a field programmable gate array (FPGA), an application specific integrated circuit (ASIC), a microcontroller, etc.

In some embodiments, sensing components 206 can include components that are used to capture image data of a scene (e.g., 2D visible light image data, 2D non-visible light image data, image data that includes depth, etc.) within a field of view of imaging device 202, and/or determine a three-dimensional location of an object (e.g., a dock, a vessel, etc.), and/or other feature of an environment (e.g., a water surface) that is within a field of view of imaging device 202. In some embodiments, imaging device 202 can include components used to implement one or more of imaging devices 72-78.

For example, imaging device 202 can be implemented as one or more cameras that include components that facilitate capture of 2D image data of a scene, such as a conventional digital camera (e.g., implemented using a CMOS or CCD image sensor). As another example, device 202 can be implemented as one or more cameras that include components that facilitate capture three-dimensional imaging of a region of an environment, such as a stereoscopic camera, a structured light camera, a continuous-wave time-of-flight camera, a direct time-of-flight camera, etc. As yet another example, imaging device 202 can be implemented as one or more lidar devices (e.g., a scanning lidar, a lidar including a 2D array sensor, etc.) that include components that facilitate three-dimensional characterization of a region of an environment. In such an example, a camera(s) (e.g., a two-dimensional camera) can be located to have an overlapping field of view with a lidar device (e.g., such a camera can be co-located), and can be used to capture images that can be used to classify portions of the environment (e.g., using a machine learning model trained to perform image segmentation). As still another example, imaging device 202 can be implemented as one or more sound-based devices (e.g., one or more sonar systems, such a side-scanning sonar system, etc.) that include components that facilitate three-dimensional characterization of a region of an environment. As a further example, imaging device 202 can be implemented as one or more radio wave-based devices (e.g., one or more radar systems, etc.) that include components that facilitate three-dimensional characterization of a region of an environment.

In some embodiments, inputs 208 can include any suitable input devices and/or sensors that can be used to receive user input, such as a keyboard, a mouse, a touchscreen, a touchpad, a microphone, a camera, etc. In some embodiments, imaging device 202 can omit inputs (e.g., where the imaging device is an embedded device, or where the imaging device is not configured for direct end user operation).

In some embodiments, communication system(s) 210 can include any suitable hardware, firmware, and/or software for communicating information over a communication network 214 and/or any other suitable communication networks. For example, communication system(s) 210 can include one or more transceivers, one or more communication chips and/or chip sets, etc., that can be used to establish a wired and/or wireless communication link. In a more particular example, communication system(s) 210 can include hardware, firmware, and/or software that can be used to establish a direct or indirect wired connection and/or a direct or indirect wireless connection, such as a CAN bus connection, a Bluetooth connection, Bluetooth Low Energy (BLE) connection, a ZigBee connection, a Wi-Fi connection, a cellular connection (e.g., an uplink connection, a downlink connection, or a sidelink connection), an ultra-wideband (UWB) connection, an Ethernet connection, etc.

In some embodiments, memory 212 can include any suitable storage device or devices that can be used to store instructions, values, etc., that can be used, for example, by processor 204 to perform processes described herein, to capture image data and/or generate depth information of a portion of the environment that characterizes the portion of the environment in two- or three-dimensions based on output from sensing components 206, to identify and/or classify one or more objects and/or other features in a scene based on the depth information and/or image information, to communicate with control system 220 (e.g., sensor processor 70, controller 24, and/or any other suitable control system) via communications system(s) 210, etc. Memory 212 can include any suitable volatile memory, non-volatile memory, storage, or any suitable combination thereof. For example, memory 212 can include random access memory (RAM), read-only memory (ROM), electronically erasable programmable read-only memory (EEPROM), one or more flash drives, one or more hard disks, one or more solid state drives, one or more optical drives, etc. In some embodiments, in addition to, or in lieu of, hardware, firmware, and/or software for communicating using radio waves, communication system(s) 210 can include one or more transmitters and/or receivers configured to communicate using one or more other communication modalities (e.g., sound-based communication, light-based communication, etc.), such as a transducer (e.g., for implementing sound-based communication), or a light sensor and/or light source (e.g., for implementing light-based communication).

In some embodiments, imaging device 202 can include any suitable display device(s) (not shown), such as a computer monitor, a touchscreen, a television, etc.

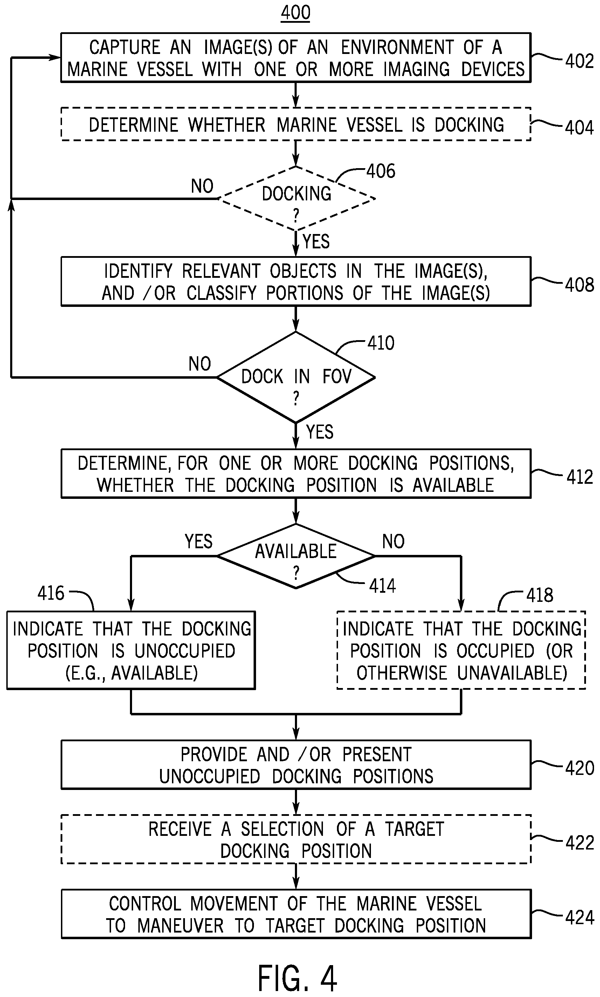

In some embodiments, memory 212 can have encoded thereon a computer program for controlling operation of imaging device 202. In such embodiments, processor 204 can execute at least a portion of the computer program to generate image data, to generate depth information, to identify and/or classify one or more objects and/or other features in a scene based on the image data and/or depth information, to transmit information to control system 220 (and/or any other suitable control system), to execute at least a portion of a process for automatically identifying available docking positions using a vision system of a marine vessel, such as processes described below in connection with FIGS. 4 to 7, etc.

In some embodiments, communication network 214 can be any suitable communication network or combination of communication networks. For example, communication network 214 can include a Wi-Fi network (which can include one or more wireless routers, one or more switches, etc.), a peer-to-peer network (e.g., a Bluetooth network, a UWB network), a cellular network (e.g., a 3G network, a 4G network, a 5G network, etc., complying with any suitable standard(s), such as CDMA, GSM, LTE, LTE Advanced, 5G NR, etc.), a wired network, etc. In some embodiments, communication network 214 can include one or more portions of a control area network (CAN), a local area network (LAN), a wide area network (WAN), a public network (e.g., the Internet, which may be part of a WAN and/or LAN), any other suitable type of network, or any suitable combination of networks. Communications links shown in FIG. 2 can each be any suitable communications link or combination of communications links, such as wired links, fiber optic links, Wi-Fi links, Bluetooth links, UWB links, cellular links, etc.

In some embodiments, control system 220 can include a processor 224, a display 226, one or more inputs 228, one or more communication system(s) 230, memory 232, and/or one or more output devices 234. In some embodiments, processor 224 can be any suitable hardware processor or combination of processors, such as a CPU, an APU, a GPU, an FPGA, an ASIC, etc. In some embodiments, display 226 can include any suitable display devices, such as a computer monitor, a touchscreen, a television, etc. In some embodiments, inputs 228 can include any suitable input devices and/or sensors that can be used to receive user input, such as a keyboard, a mouse, a touchscreen, a microphone, etc. In some embodiments, control system 220 can omit display 226 and/or inputs 228 (e.g., where control system 220 is an embedded device that is not configured for direct user interaction). For example, control system 220 can provide results of an analysis, image data, and/or a portion of a user interface to controller 24, and controller 24 can use the results, image data, and/or user interface to present a user interface, present image data, perform one or more autonomy functions, etc. In some embodiments, any suitable controller and/or control module (e.g., controller 24, sensor processor 70, and/or any other suitable control system) can be used to implement control system 220.

In some embodiments, communication system(s) 230 can include any suitable hardware, firmware, and/or software for communicating information over communication network 214 and/or any other suitable communication networks. For example, communication system(s) 230 can include one or more transmitters, one or more receivers, one or more transceivers, one or more communication chips and/or chip sets, etc., that can be used to establish a wired and/or wireless communication link. In a more particular example, communication system(s) 230 can include hardware, firmware, and/or software that can be used to establish a direct or indirect wired connection and/or a direct or indirect wireless connection, such as a CAN bus connection, a Bluetooth connection, a BLE connection, a ZigBee connection, a UWB connection, a Wi-Fi connection, a cellular connection (e.g., an uplink connection, a downlink connection, or a sidelink connection), an Ethernet connection, etc. In some embodiments, in addition to, or in lieu of, hardware, firmware, and/or software for communicating using radio waves, communication system(s) 230 can include one or more transmitters and/or receivers configured to communicate using one or more other communication modalities (e.g., sound-based communication, light-based communication, etc.), such as a transducer (e.g., for implementing sound-based communication), or a light sensor and light source (e.g., for implementing light-based communication).

In some embodiments, memory 232 can include any suitable storage device or devices that can be used to store instructions, values, etc., that can be used, for example, by processor 224 to analyze image data and/or depth information received from device 202 (and/or any other suitable imaging device), to identify and/or classify one or more objects and/or other features in a scene based on the image data and/or depth information, to communicate with imaging device 202 via communications system(s) 230, etc. Memory 232 can include any suitable volatile memory, non-volatile memory, storage, or any suitable combination thereof. For example, memory 232 can include RAM, ROM, EEPROM, one or more flash drives, one or more hard disks, one or more solid state drives, one or more optical drives, etc.

In some embodiments, memory 232 can have encoded thereon a computer program for controlling operation of control system 220. In such embodiments, processor 224 can identify available docking positions based on classification information, select an available docking position as a target docking position, determine a path to the target docking position, cause the marine vessel to maneuver to the target docking position using the path, cause a graphical user interface to be presented to a user(s), receive information from imaging device 202, to execute at least a portion of a process for automatically identifying available docking positions using a vision system of a marine vessel, such as processes described below in connection with FIGS. 4 to 7, etc.

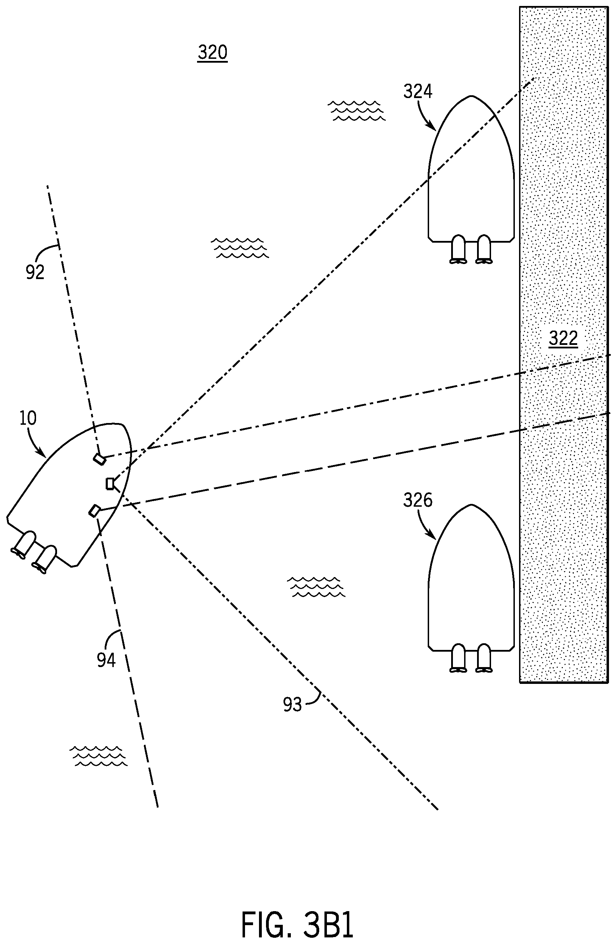

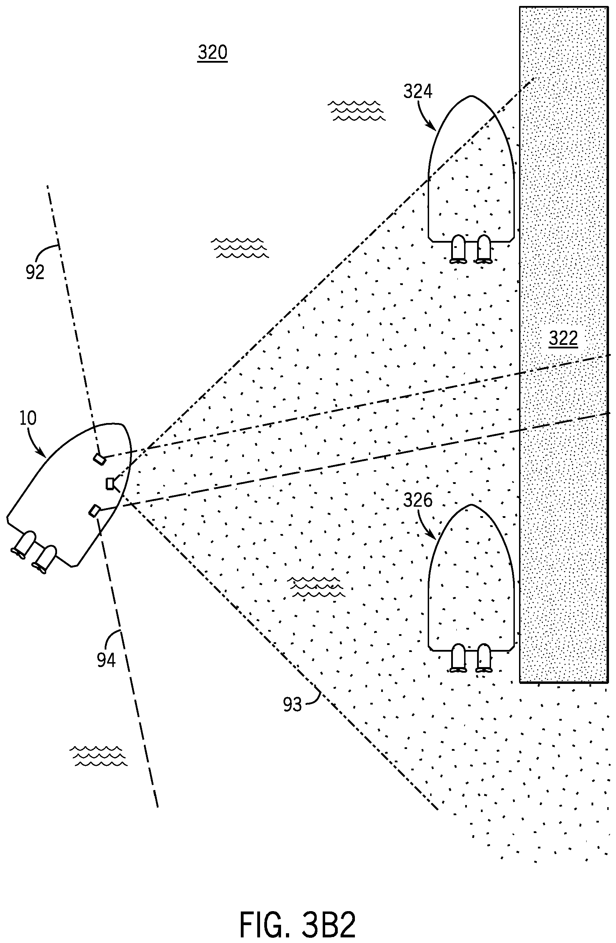

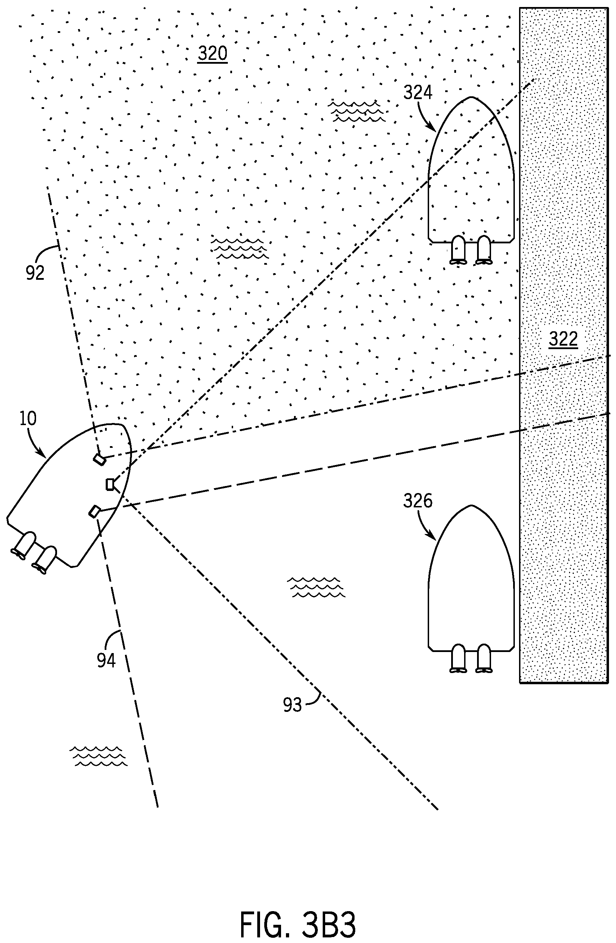

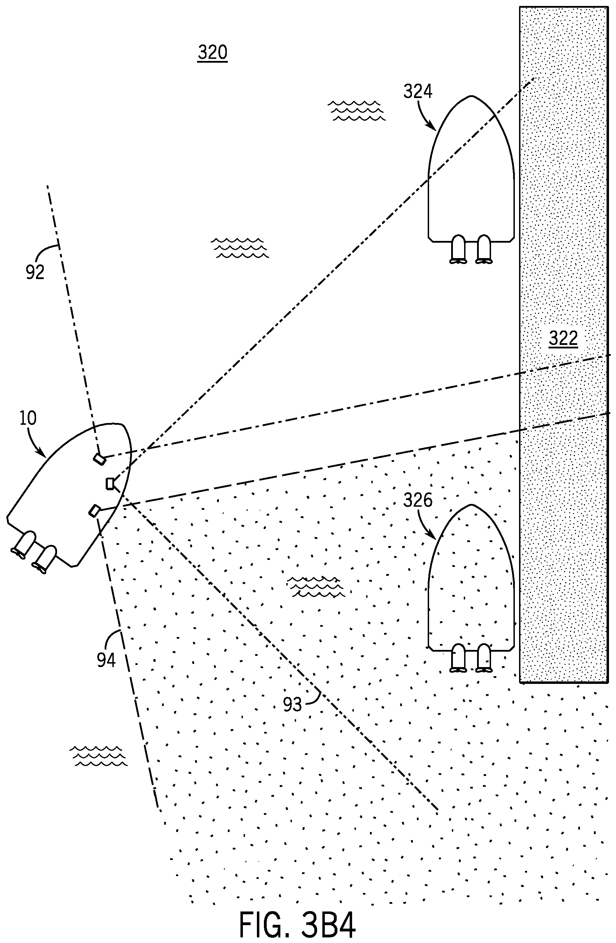

FIGS. 3A1 to 3A4 show an example 300 of a marine environment in which a marine vessel can execute a process for automatically identifying available docking positions using a vision system of a marine vessel in accordance with some embodiments of the disclosed subject matter, and FIGS. 3B1 to 3B4 show another example 320 of a marine environment in which a marine vessel can execute a process for automatically identifying available docking positions using a vision system of a marine vessel in accordance with some embodiments of the disclosed subject matter. In some embodiments, vessel 10 (e.g., via control system 220) can monitor an environment (e.g., environment 300 or environment 320) for available docking positions (e.g., when vessel 10 is in a docking mode or state, when vessel 10 is approaching a dock(s), whenever vessel 10 is monitoring the environment such as monitoring for obstacles and/or to avoid collisions, etc.)

For example, in FIGS. 3A1 to 3A4, environment 300 can include various docks 304, 306, 308 at which marine vessels can be docked. These docks can be different portions of one dock structure (e.g., docks 304, 306, and 308 can be fingers coupled to a larger structure, such as dock fingers of a dock forming part of a marina) or individual docks (e.g., coupled to a non-dock structure, such as a retaining wall). Additionally, environment 300 in FIGS. 3A1 to 3A4 can include various vessels 310, 312, and 314 moored at docking positions associated with docks 304, 306, and 308. Note that this is an example, there may be more or fewer objects in an environment around a vessel, or other types of objects.

As another example, in FIGS. 3B1 to 3B4, environment 320 can include a single dock 322 at which marine vessels can be docked, which may or may not be a portion of a larger dock structure. Additionally, environment 320 in FIGS. 3B1 to 3A4 can include vessels 324 and 326, moored at docking positions associated with dock 322. Note that this is an example, there may be more or fewer objects in an environment around a vessel, or other types of objects.

In some embodiments, vessel 10 can monitor a particular area, or areas, for available docking positions that may be available docking positions for vessel 10. For example, vessel 10 can monitor an area around vessel 10 (e.g., using one or more of imaging devices 72-78) for available docking positions (and potentially for other functions, such as collision detection or path planning). As another example, vessel 10 can monitor only areas around vessel 10 that include objects identified as docks, such as areas within FOVs 92, 93, and 94 in FIGS. 3A1 to 3A4, for available docking positions. As yet another example, vessel 10 can monitor only areas around vessel 10 that include objects identified as docks, such as areas within FOVs 92, 93, and 94 in FIGS. 3B1 to 3B4, for available docking positions.

In the example of FIGS. 3A1 to 3A4, docks 304, 308, and 310 and vessels 310, 312, and 314 are included in the field of view of an imaging device of vessel 10 (specifically within FOVs 92, 93, and 94 of imaging devices 72, 73, and 76, respectively), and in the example of FIGS. 3B1 to 3B4, dock 322 and vessels 324 and 326 are included in the field of view of an imaging device of vessel 10 (specifically within FOVs 92, 93, and 94 of imaging devices 72, 73, and 76, respectively). In some embodiments, mechanisms described herein can use one or more object recognition techniques to identify whether particular image data (e.g., an image from a particular imaging device) includes a dock object, a vessel object, water, etc. For example, vessel 10 can classify image data captured using an imaging device to determine whether a portion of the image data includes an object relevant to docking using any suitable technique or combination of techniques, such as image classification techniques used to implement an image classification model, object localization techniques used to implement an object classification and/or localization model, object detection techniques used to implement an object detection model, image segmentation techniques used to implement an image segmentation model, etc., that includes a class(es) corresponding to objects that can function as docks.

In some embodiments, mechanisms herein can use one or more techniques to identify objects and/or other features relevant to docking (e.g., docks, vessels, water, etc.), and determine whether a particular docking position(s) is likely available for securing vessel 10. For example, mechanisms described herein can provide image data that may include a dock object that to a trained machine learning model that is configured (e.g., based on the architecture and training of the model) to identify whether the image includes a dock object and/or identify where in the image the dock object(s) is located. In a more particular example, mechanisms described herein can provide image data that may include a dock object(s) to an object detection model, an object localization model, an image segmentation model, etc., configured to identify a particular portion of the image data corresponding to a dock object (or other object).

As another example, mechanisms described herein can provide the image data that may include a dock object to a trained machine learning model that is configured (e.g., based on the architecture and training of the model) to identify which portion(s) of the image correspond to water (e.g., a surface of the body of water on which vessel 10 is located). In a more particular example, mechanisms described herein can provide image data that may include a dock object(s) to an image segmentation model, etc., configured to identify portions of the image data corresponding to water.

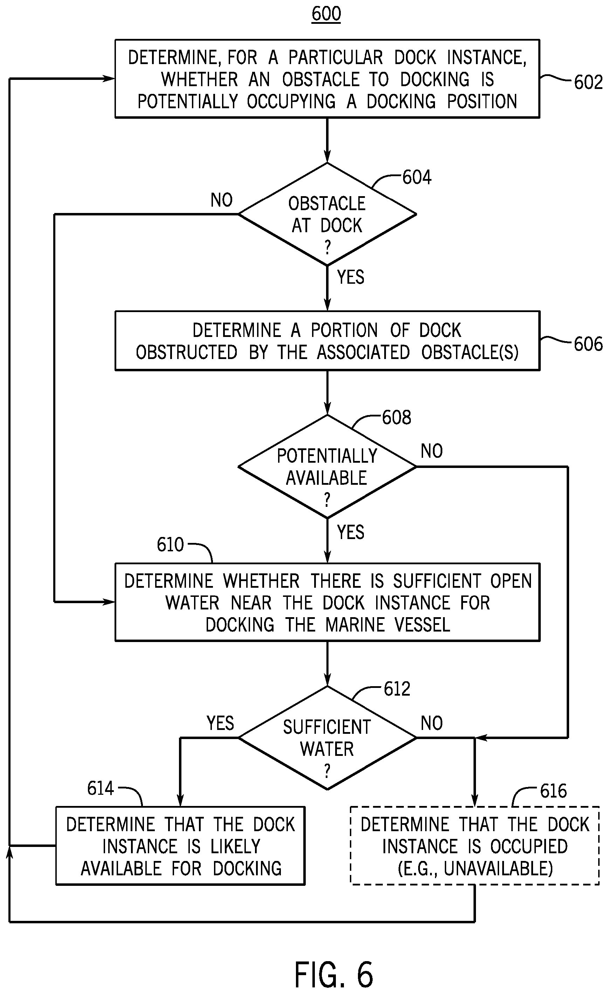

In FIG. 3A2, FOV 93 is highlighted, showing areas of environment 300 that are potentially depicted in an image captured by imaging device 73. As shown in the example, docks 306 and 308 are included within FOV 93, as well as vessels 310 and 312, additionally portions of dock 304 and vessel 314 are within FOV 93, with vessel 314 positioned between dock 304 and imaging device 73, at least partially obstructing dock 304 from imaging device 73. In FIG. 3A3, FOV 92 is highlighted, showing areas of environment 300 that are potentially depicted in an image captured by imaging device 72. As shown in the example, dock 304 is included within FOV 92, as well as vessel 314, additionally a portion of dock 306 is within FOV 92. In FIG. 3A4, FOV 94 is highlighted, showing areas of environment 300 that are potentially depicted in an image captured by imaging device 74. As shown in the example, dock 308 is included within FOV 94, as well as vessels 310 and 312. As described below in connection with FIG. 6, different imaging devices mounted in different positions on vessel 10 can different FOVs as well as different perspectives of objects in environment 300. As shown in FIGS. 3A1 to 3A4, a dock position may appear occupied from the perspective of a particular imaging device (e.g., due to a vessel in the background, such as vessel 314 potentially being behind dock 306 in a portion of an image captured by imaging device 72) but available from another perspective (e.g., in an image captured by imaging device 73).

In FIG. 3B2, FOV 93 is highlighted, showing areas of environment 320 that are potentially depicted in an image captured by imaging device 73. As shown in the example, a portion of dock 322 is included within FOV 93, as well as vessel 324 and a portion of vessel 326 are within FOV 93, with vessels 324 and 326 positioned between other portions of dock 322 and imaging device 73, at least partially obstructing a portion of dock 322 from imaging device 73. In FIG. 3A3, FOV 92 is highlighted, showing areas of environment 320 that are potentially depicted in an image captured by imaging device 72. As shown in the example, a portion of dock 322 is included within FOV 92, as well as vessel 324. In FIG. 3A4, FOV 94 is highlighted, showing areas of environment 320 that are potentially depicted in an image captured by imaging device 74. As shown in the example, a portion of dock 322 is included within FOV 94, as well as vessel 326. As shown in FIGS. 3B1 to 3B4, a portion of dock 322 that may appear available (e.g., using techniques described herein) in an image captured by imaging devices 92 and 93 may appear occupied in an image captured by imaging device 94.

FIG. 4 shows an example of a process 400 for automatically identifying available docking positions using a vision system of a marine vessel in accordance with some embodiments of the disclosed subject matter.

At 402, process 400 can capture (and/or receive) one or more images of an environment of a marine vessel with one or more imaging devices. In some embodiments, process 400 can capture image data of an environment of the marine vessel using any suitable imaging device(s), such as one or more of imaging devices 72-78. Note that the image data can be in any suitable format and/or multiple formats. For example, the image data can be a conventional two-dimensional digital image(s) (e.g., RGB data, grayscale data, monochrome data, etc., encoded in a RAW format, a high efficiency image file format (HEIF), a joint picture group (JPEG) format, etc.). As another example, the image data can be a conventional three-dimensional image (e.g., including a depth map, an RGBD image, etc.). In some embodiments, process 400 can capture image data using multiple image sensors with substantially overlapping fields of view. For example, a single imaging device can include multiple image sensors, such as left and right image sensors of a stereoscopic imaging device (e.g., which can be monochrome image sensors or color image sensors). Additionally, in such an example, a stereoscopic imaging device can include a 2D color image sensor that can be used to capture color image data (e.g., which can be used to perform a computer vision task(s), such as image segmentation, object detection, etc., that may benefit from color information included in the color image data).

At 404, process 400 can determine whether the vessel is docking or is likely to be docking. For example, process 400 can determine whether the vessel is in the process of navigating to a docking position (e.g., associated with a structure, such as a dock, a slip, etc.).

In some embodiments, process 400 can determine that the marine vessel is docking using any suitable technique or combination of techniques. For example, process 400 can determine that the marine vessel is docking based on input received via an input device (e.g., input 228) indicative of selection of a particular mode (e.g., a docking mode, etc.), such as selection of a selectable user interface element presented using a graphical user interface (e.g., on MFD 29), selection of a key of keypad 28, and/or using any other suitable input device.

As another example, process 400 can determine that the marine vessel is docking based on content of an image captured by an imaging device (e.g., the image data including a dock, a slip, etc.). In a more particular example, process 400 can determine that the marine vessel is docking based on at least one dock instance (e.g., the same dock instance, potentially different dock instances, etc.) being present in the FOV of a particular imaging device or imaging devices for at least a predetermined amount of time (e.g., 15 seconds, 30 second, 1 minute, 5 minutes, etc.). In such an example, process 400 can prompt an operator to confirm that the marine vessel is being docked (e.g., via a graphical user interface).

As yet another example, process 400 can determine that the marine vessel is docking based on chart information. In a more particular example, process 400 can determine that the marine vessel is docking based on marine vessel 10 being located within a particular distance from a dock marked on a navigation chart and/or moving is toward such a dock.

If process 400 determines that the marine vessel is not docking ("NO" at 406), process 400 can return to 402, and can continue capturing images of the environment.

Otherwise, if process 400 determines that the marine vessel is docking ("YES" at 406), process 400 can move to 408. For example, in some embodiments, process 400 can performance of certain tasks (e.g., tasks described below in connection with 408 to 424) to be inhibited if process 400 determines that the vessel is not docking, and can cause such tasks to be performed if process 400 determines that the vessel is docking. In such an example, inhibiting certain tasks from being performed when the vessel is not docking can reduce utilization of computing resources. Alternatively, in some embodiments, one or more tasks described herein as being used to identify available docking positions can be performed regardless of whether the vessel is docking, and/or can be performed in connection with other processes (e.g., collision monitoring, path planning, etc.), regardless of whether the vessel is docking. For example, process 400 can be used to identify available docking positions regardless of whether the vessel is currently docking, and can inhibit presentation and/or use of information regarding the location of available docking positions while the vessel is not docking. As another example, 400 can be used to identify available docking positions regardless of whether the vessel is currently docking, and can present information regarding the location of the available docking positions regardless of whether the vessel is docking. As a more particular example, if vessel 10 is presenting a GUI (e.g., via display 29) that shows a representation of a portion of the environment that includes an available docking location, process 400 can present a user interface element indicating that the docking location is available regardless of whether the vessel is currently docking (e.g., selection of the user interface can initiate a transition to docking). As another more particular example, if vessel 10 is using an autonomy system to maneuver vessel 10 to a target location and/or to perform a particular navigation task, process 400 can identify available docking positions regardless of whether the vessel is currently docking (e.g., facilitating a more complete understanding of the environment by the autonomy system).

In some embodiments, process 400 can omit 404 and 406, for example if a device executing at least a portion of process 400 (e.g., controller 24, sensor processor 70, etc.) is configured to continuously monitor the environment for potentially available docking positions (e.g., as part of a process of monitoring the environment around the vessel more generally). Alternatively, in some embodiments, process 400 can perform 404 and 406 in connection with a different portion of process 400. For example, process 400 can perform tasks associated with 402 and 408 to 418 regardless of whether the vessel is docking, and can determine whether the vessel is docking prior to presenting a user interface element(s) associated with available docking locations.

At 408, process 400 can identify relevant objects in the image(s) captured at 402, and/or classify one or more portions of the image(s) captured at 402. In some embodiments, process 400 can use any suitable technique or combination to identify relevant objects and/or classify one or more portions of the image(s). For example, process 400 can use techniques described above in connection with FIGS. 1 to 3B4, such as techniques that associate a class of a plurality of classes (e.g., including classes relevant to docking) with a portion of an image and/or identifies a position of particular instances of classes in the scene.

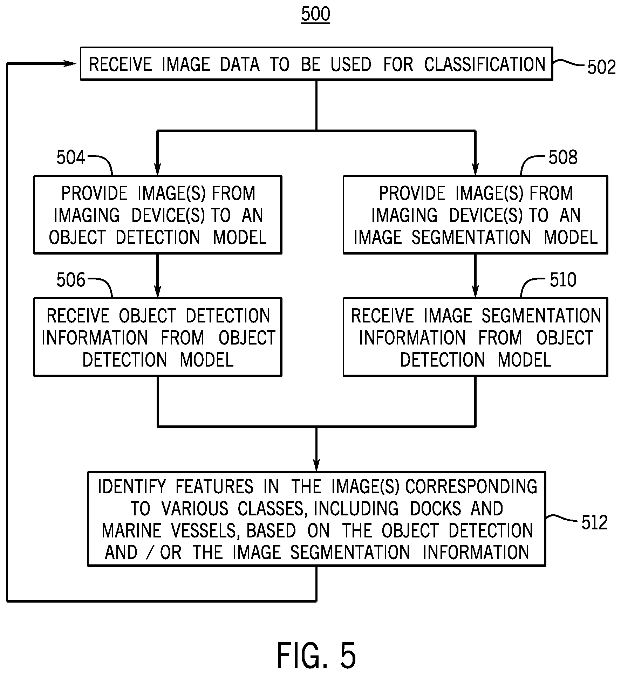

As another example, process 400 can use techniques described below in connection with process 500 of FIG. 5 to identify relevant objects and/or classify one or more portions of the image(s). As yet another example, process 400 can use a machine learning model trained to perform panoptic image segmentation. In such an example, a panoptic image segmentation model can be trained to classify different portions of a scene, and distinguish between portions of the scene corresponding to different instances of objects that are in the same class (e.g., the model can be trained to perform both semantic segmentation and instance segmentation tasks).

In some embodiments, process 400 can analyze images, at 408, in every image captured by the imaging devices of the vessel. Alternatively, in some embodiments, process 400 can identify relevant objects, at 408, for a subset of images captured by imaging devices of the vessel. For example, process 400 can analyze images, at 408, for images captured by imaging devices for which a dock is included in the FOV of the imaging device, and can omit identifying relevant objects, at 408, for images captured by imaging devices for which a dock is not included in the FOV. As another example, process 400 can analyze images, at 408, for a reduced subset of images captured by an imaging device(s). In such an example, if imaging devices are configured to capture images at a frame rate that is greater than a rate at which objects can be identified in the images, process 400 can analyze images, at 408, at a lower frame rate than the frame rate at which the images are captured. In a more particular example, if the imaging devices are configured to capture images at 24 or 30 frames per second (or higher), and the device(s) executing at least a portion of process 400 (e.g., at least identifying relevant objects and/or classifying portions of the image at 408) is capable of analyzing images at a rate of about 36 to 60 frames per second (e.g., facilitating analyzes of one image from each of the six imaging devices at a rate of about 6 to 10 frames per second), process 400 can analyze a subset of the images captured by the imaging devices (e.g., images captured every fifth frame, images captured every third frame, etc.).

At 410, process 400 can determine whether a portion of a dock is included in one of the images. In some embodiments, process 400 can use any suitable technique or combination of techniques to determine whether at least one dock is included in an image analyzed at 408. For example, process 400 can use object detection information (e.g., classes of objects detected in the image(s)) and/or image segmentation information (e.g., classes associated with a portion(s) of the image(s)) to determine whether a dock is included in one of the images. In a more particular example, process 400 can determine that a dock is included in the image if a dock object is included in object detection information received from an object detection model used to analyze the image (e.g., with at least a predetermined confidence). In another more particular example, process 400 can determine that a dock is included in the image at least a predetermined portion of the image (e.g., a predetermined number of pixels) has been classified as dock (e.g., with at least a predetermined confidence). As another example, process 400 can use techniques described below in connection with process 500 of FIG. 5 to determine whether at least one dock is included in an image analyzed at 408.

If process 400 determines that a dock or portion of a dock is not in an image ("NO" at 410), process 400 can return to 402, and can continue capturing images of the environment.

Otherwise, if process 400 determines that an image includes a dock or portion of a dock ("YES" at 410), process 400 can move to 412.

At 412, process 400 can determine, for one or more docking positions included in an image(s), whether the docking position is available. In some embodiments, process 400 can use any suitable technique or combination of techniques to determine whether a docking position in the image(s) is available. For example, process 400 can determine whether an obstructing object (e.g., another vessel) is near the docking position. In a more particular example, process 400 can determine whether an obstructing object is near the docking position based on the location of the object and the location of the dock in the image. As another more particular example, process 400 can determine whether an obstructing object is near the docking position based on the location of the object and the location of the dock in the environment (e.g., based on depth information associated with the dock and the obstructing object). As another example, process 400 can determine whether an area of open water near the docking position is sufficient to dock the vessel at that docking position. As yet another example, process 400 can use techniques described below in connection with process 600 of FIG. 6 to determine whether an area of open water near the docking position is sufficient to dock the vessel at that docking position.

If process 400 determines that a docking position is available ("YES" at 414), process 400 can move to 416, and otherwise, if process 400 determines that a docking position is not available ("NO" at 414), process 400 can move to 418.

At 416, process 400 can indicate that a docking position that was determined to be available, at 412, is unoccupied. In some embodiments, process 400 can use any suitable technique or combination of techniques to indicate that a particular docking position is available. For example, process 400 can record location information associated with the docking position in memory (e.g., in a geographic coordinate system). In such an example, process 400 can record the location information of the docking position in connection with any suitable additional information that can be used to identify the docking position, such a size of the available docking position, an orientation of the available docking position, coordinates of a particular portion of the docking position (e.g., a particular corner, a center, etc.), coordinates of multiple corners defining an area (e.g., corners of a rectangle), etc.

As another example, process 400 can associate information with one or more portions of a model of the environment (e.g., a point cloud representing the environment, an occupancy grid, etc.) that indicates the portion of the environment corresponds to an available docking position. In a more particular example, process 400 can set a value associated with a particular point cloud point(s) (e.g., a color value, a value of a particular color channel, a value of an alpha channel, etc.) that indicates that the point corresponds to a location of an available docking position. As another more particular example, process 400 can set a value associated with a particular cell of an occupancy grid (e.g., a value in a layer or mask of the occupancy grid, such as a color value, a value of a particular color channel, etc.) that indicates that the cell corresponds to a location of an available docking position.

At 418, process 400 can indicate that the docking position that was determined to not be available is occupied (or otherwise unavailable). In some embodiments, process 400 can use any suitable technique or combination of techniques to indicate that a particular docking position is unavailable. For example, process 400 can record location information associated with the docking position in memory (e.g., in a geographic coordinate system) as a location associated with an occupied docking position.

As another example, process 400 can associate information with one or more portions of a model of the environment (e.g., a point cloud representing the environment, an occupancy grid, etc.) that indicates the portion of the environment corresponds to an unavailable docking position. In a more particular example, process 400 can set a value associated with a particular point cloud point(s) (e.g., a color value, a value of a particular color channel, a value of an alpha channel, etc.) that indicates that the point corresponds to a location of an unavailable docking position. As another more particular example, process 400 can set a value associated with a particular cell of an occupancy grid (e.g., a value in a layer or mask of the occupancy grid, such as a color value, a value of a particular color channel, etc.) that indicates that the cell corresponds to a location of an unavailable docking position.

In some embodiments, process 400 can omit 418. For example, process 400 can record information indicating where available docking locations are, and may omit recording information positively indicating whether a particular docking location is unavailable.

At 420, process 400 can provide and/or present unoccupied docking positions. In some embodiments, process 400 can provide information that identifies a location(s) of an unoccupied docking position(s) to a process that uses such information to facilitate selection of an unoccupied docking position. For example, process 400 can provide information that identifies a location(s) of unoccupied docking positions to a device presenting a graphical user interface (e.g., display 29, display 226, etc.), such that user interface elements can be presented representing an unoccupied docking position(s) to facilitate selection of an available docking position (e.g., by a user).

Additionally or alternatively, in some embodiments, process 400 can provide information that identifies locations of unoccupied docking positions to a process that uses such information to facilitate one or more autonomous navigation processes and/or other suitable advanced operator assistance processes. For example, process 400 can provide information that identifies a location(s) of an unoccupied docking position(s) to an autonomy system (e.g. implemented via controller 24, sensor processor 70, processor 224, etc.), such that the location(s) of an unoccupied docking position(s) can be used in an autonomous navigation process, such as autodocking. In a more particular example, the location information can be used to automatically (e.g., without user intervention) select a docking position at which to dock the vessel. In such an example, one or more of unoccupied docking positions can be presented (e.g., in a GUI) for viewing by a user, or an available docking position can be selected without presenting any information about unoccupied docking positions. In a yet more particular example, an unoccupied docking position that has been automatically selected can be presented (e.g., via a GUI) with a prompt requesting a user confirm that the docking position is available (e.g., via an image(s) and/or video(s) of the docking position presented via the GUI).

In some embodiments, information that identifies locations of unoccupied docking positions can be in any suitable format (e.g., as information associated with point cloud points, information associated with occupancy grid cells, coordinates, etc.), and can include any suitable information, etc.

In some embodiments, process 400 can use any suitable technique or combination of techniques to present unoccupied docking positions for selection by a user, such as techniques described in U.S. Patent Application No. 18/468,289, filed September 15, 2023 (e.g., techniques described in connection with FIGS. 5A to 12 of U.S. Patent Application No. 18/468,289).

At 422, process 400 can receive a selection of a target docking position. In some embodiments, one or more input devices can be used to select a target position presented via a user interface (e.g., a GUI), such as a touchscreen presenting the GUI, a keypad a keyboard, a track ball, a track pad, any other suitable user input device, and/or suitable combination of user input devices. In some embodiments, process 400 can use any suitable technique or combination of techniques to receive a selection of a target docking position (e.g., selected from one or more unoccupied for selection by a user, such as techniques described in U.S. Patent Application No. 18/468,289, filed September 15, 2023 (e.g., techniques described in connection with FIGS. 5A to 12 of U.S. Patent Application No. 18/468,289).

At 424, process 400 can include controlling movements of the marine vessel to maneuver to the target position based on the location of the target docking position. In some embodiments, process 400 can facilitate control by an operator (e.g., via information presented at 420 and/or 422). For example, process 400 can present (and update in real-time) a graphical user interface that includes a user interface element illustrating a relationship between the target docking location and the marine vessel, which can provide visually feedback to an operator while controlling the vessel.

Additionally or alternatively, in some embodiments, process 400 can include using information indicative of a target location based on the location of the target docking position selected at 422 to determine a set of marine vessel maneuvers that safely and efficiently move the marine vessel to the target docking position based. For example, the autonomy system can determine a path based on the target docking position and locations of obstacles in the environment, and can use the path to propel the marine vessel to the target docking position.

In such examples, the autonomy system can determine marine vessel movements that can cause the marine vessel to reach the target position, and control a propulsion system of the marine vessel (e.g., propulsion system 20) that actuates a marine propulsion device(s) (e.g., propulsion device 12a and/or 12b) to propel the marine vessel to the target docking position without operator intervention. Note that the autonomy system can automatically control thrust produced by propulsion system 20, which can vary in magnitude and/or direction along a path to the target position in order to counteract and/or take advantage of the estimated environmental conditions.

FIG. 5 shows an example of a process 500 for identifying relevant objects and classifying portions of images of a marine environment in accordance with some embodiments of the disclosed subject matter.

At 502, process 500 can receive image data (and/or any other suitable data, such as depth data) to be used for classification. In some embodiments, process 500 can receive the image data from any suitable source (e.g., one or more cameras such as imaging device 202, memory associated with one or more cameras, memory associated with a controller and/or sensor processor, etc.), and/or can cause the image data to be captured or otherwise generated. For example, process 500 can cause a camera(s) to capture an image(s) of an environment of the marine vessel that may include one or more features relevant to docking and/or determining whether a docking position is available. In some embodiments, process 500 can capture an image(s) of an environment of the marine vessel using any suitable imaging device, such as imaging device 72, and/or one or more of imaging devices 72-78.

At 504, process 500 can provide one or more images received at 502 to a trained object detection model. For example, process 500 can provide one or more images received at 502 to an object detection model trained to generate object detection information that indicates a location and class of an object in an image (e.g., as described above in connection with FIG. 1). In some embodiments, the classes that the object detection model is trained to detect can include at least a dock class and a vessel class. For example, in some embodiments, the object detection model can be trained to detect instances in an input image of dock objects, vessel objects, etc.

At 506, process 500 can receive object detection information from the trained object detection model. For example, process 500 can receive information indicative of a location and dimensions of a bounding box, a class(es) associated with the bounding box, and an indicator of confidence in the classification (e.g., as described above in connection with FIG. 1).

In some embodiments, process 500 can include increasing a portion of the image associated with an object. For example, process 500 can increase a vertical and/or horizontal dimension of a bounding box associated with a dock object.

Additionally or alternatively, in some embodiments, process 500 can generate additional object detection information based on object detection information received at 506. For example, process 500 can use a location and dimensions of a 2D bounding box associated with a dock class to identify a group of point cloud points corresponding to the dock within the 2D bounding box (e.g., based on a projection of the 2D bounding box into three dimensions, using a clustering technique, etc.). In such an example, process 500 can attempt to draw a 3D bounding box around the object identified using the 2D bounding box.

In some embodiments, any suitable machine learning model trained to perform instance identification can be used at 504 and 506, such as an object detection model as described above. As another example, an object localization model(s) can be used to identify locations of instances of a relevant class of objects (e.g., a dock localization model can be used to identify locations of dock instances, a vessel localization model can be used to identify locations of vessel instances, etc.). As yet another example, a panoptic segmentation model can be used to identify regions of an image corresponding to different instances of a class, such as a dock class, a vessel class, etc.

At 508, process 500 can provide one or more images received at 502 to a trained image segmentation model. For example, process 500 can provide one or more images received at 502 to an image segmentation model trained to generate image segmentation information that indicates a class to which a portion of the image (e.g., a pixel) belongs (e.g., as described above in connection with FIG. 1). In a more particular example, process 500 can provide the image(s) to a trained image segmentation model trained to generate segmentation information classifying regions (e.g., each corresponding to one or more pixels of the image) as most likely belonging to a certain class and/or a probability of the region corresponding to each of various classes.

In some embodiments, the classes that the image segmentation model is trained to segment can include at least water. For example, in some embodiments, the image segmentation model can be trained to segment an input image to identify portions corresponding to a water class, portions corresponding to a sky class, and portions corresponding to neither the water class nor the sky class (e.g., an "other" class).

At 510, process 500 can receive image segmentation information from the trained image segmentation model. For example, process 500 can receive information indicative of a class of each portion of the image provided to the image segmentation model.

In some embodiments, the segmentation information can be formatted using any suitable format. For example, the segmentation information can be formatted as a set of masks, each corresponding to a particular class, where a particular value (e.g., a binary 1) indicates that the class is likely present at a region (e.g., a pixel or group of pixels), and another value (e.g., a binary 0) indicates that the class is likely not present at a region. In such an example, the segmentation information can be formatted as a matrix having rows and columns equal to the rows and columns of the image provided to the trained machine learning model. As another example, the segmentation information can be formatted as a set of masks, each corresponding to a particular class, where a value (e.g., in a range of 0 and 1) indicates a likelihood that the class is present at a region (e.g., a pixel or group of pixels). As yet another example, the segmentation information can be formatted as an image in which a color at each pixel indicates a classification of the pixel (e.g., "sky" can be encoded with RGB brightness values (r,g,b) using an eight bit scale, for example as rgb=(0,0,255)). In such an example, the pixel may or may not be associated with a confidence value (e.g., class can be encoded using one or more of the red, green, and blue channels, and confidence can be encoded in a channel not used to encode class, which may or may not be a color channel). Note that an image received and/or captured at 502 may have a different number of rows and/or columns than the image provided to the image segmentation model. An image received from a camera may have more pixels (e.g., it may be a higher resolution) than the image provided to the trained machine learning model, as the trained machine learning model may require an image with a particular number of pixels as input, and/or a particular number of color channels (e.g., a grayscale image with a single channel, a color image with multiple color channels, etc.).

In some embodiments, any suitable machine learning model trained to perform semantic identification at 508 and 510, such as an image segmentation model as described above. As another example, a panoptic segmentation model can be used to classify regions of an image corresponding to different classes, such as a dock class, a vessel class, a water class, a sky class, etc.

At 512, process 500 can identify features in the image(s) corresponding to various classes, including dock and marine vessel classes, based on the object detection and/or image segmentation information. For example, process 500 can identify one or more dock instances based on whether the object detection information includes a bounding box associated with a dock class. In such an example, each bounding box can be considered a different dock instance, regardless of whether the dock instances form different parts of the same dock structure. As another example, can identify one or more dock instances based on whether the object detection information includes a bounding box associated with a vessel class. As still another example, process 500 can identify water that is near a dock instance based on whether the water is within a bounding box of a dock instance.

FIG. 6 shows an example of a process 600 for identifying whether a docking position is available in accordance with some embodiments of the disclosed subject matter.

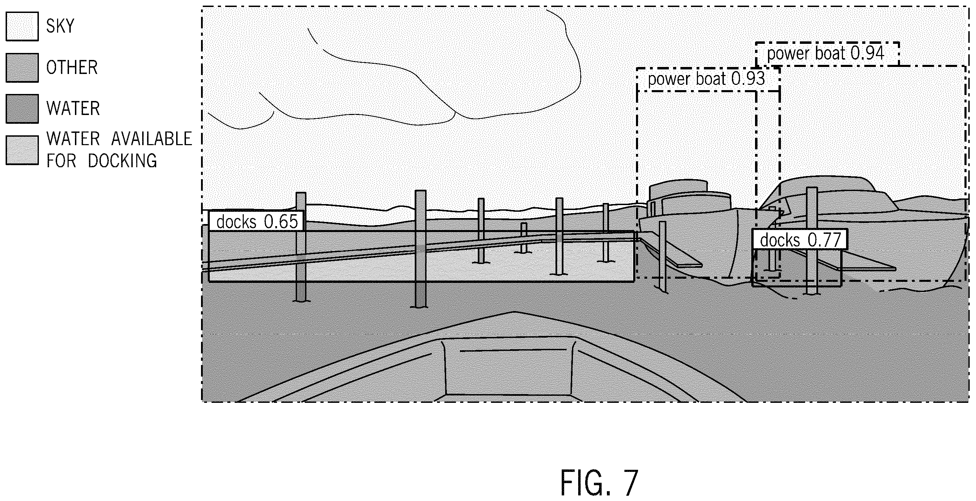

At 602, process 600 can determine, for a particular dock instance, whether an obstacle to docking is potentially occupying or otherwise obstructing a docking position associated with that dock instance. In some embodiments, process 600 can use any suitable technique or combination of techniques to determine whether an obstacle is potentially occupying or otherwise obstructing a potential docking position. For example, process 600 can determine whether a bounding box associated with a docking instance overlaps with a bounding box associated with an object (e.g., a marine vessel) that may be occupying (or otherwise obstructing) the dock. In a more particular example, as shown in FIG. 7, a bounding associated with a vessel that is docked at a particular dock instance is likely to overlap with the bounding box associated with the dock.

As another example, if a bounding box is not associated with an instance (e.g., if panoptic segmentation is used to identify dock instances, vessel instances, etc.), process 600 can include drawings a bounding box around each dock instance and around potentially obstructing objects (e.g., vessels) based on segmentation information, and determining whether the bounding boxes overlap.

If process 600 determines that there is at least one obstacle to docking at the dock instance ("YES" at 604), process 600 can move to 606.

At 606, process 600 can determine the extent to which docking at the dock instance is likely to be obstructed by the obstacle(s) using any suitable technique or combination of techniques. For example, process 600 can determine how much (e.g., a percentage, a ratio, etc.) of the bounding box associated with the dock instance overlaps with one or more bounding boxes associated with potentially obstructing objects (e.g., vessels).

If, at 606, process 600 determines that at least a threshold amount of the dock instance is obstructed, process 600 can determine that the dock instance is unavailable (e.g., that it is occupied, or otherwise not available for use). For example, the threshold used to determine whether a dock instance is obstructed can be in a range of 10% to 25%. In such an example, the threshold can be lower (e.g., closer to 10%) if the vessel docking is relatively large, and can be higher (e.g., closer to 25%) if the if the vessel docking is relatively small relative to the dock instance. As another example, the threshold can be dynamically adjusted based on a comparison of the size of the dock instance and the vessel being docked. In such an example, the threshold can be lower (e.g., closer to 10%) if the vessel docking is relatively large (e.g., if the vessel is at least 75% of the size of the dock instance), and can be higher (e.g., closer to 25%) if the if the vessel docking is relatively small relative to the dock instance (e.g., if the vessel is less than 50% of the size of the dock instance). In some embodiments, the threshold can be set at any suitable value, which can be based on an analysis of empirical data.

If process 600 determines that the dock instance is not available, for example, because the docking instance is obstructed, ("NO" at 608), process 600 can move to 616, and, as described below, can determine that the dock instance is not available for docking.

Otherwise, if process 600 determines that the dock instance is potentially available ("YES" at 608), or if process 600 determines that there are not any obstacles at the dock instance ("NO" at 604), process 600 can move to 610.

At 610, process 600 can determine whether there is sufficient open water near the dock instance to safely dock the marine vessel at the dock instance. In some embodiments, process 400 can use any suitable technique or combination of techniques to determine whether water is near a dock instance and/or whether the water is open water (e.g., water is not occupied by another type of object, such as a vessel). For example, process 600 can identify water as near a dock instance if the water falls within a bounding box associated with the dock instance. In such an example, if a pixel classified as water (e.g., a pixel corresponding to a portion of a segmentation mask classified as water) is within a bounding box associated with a dock instance, the pixel can be considered water that is near the dock instance. As another example, process 600 can identify water as potentially available for docking (e.g., as open water near the dock) if the water falls within a bounding box associated with the dock instance, and does not fall within a bounding box associated with a potentially obstructing object (e.g., if a vessel bounding box overlaps the dock bounding box by less than a threshold amount at 608, water pixels within the vessel bounding box and the dock bounding box can be considered unavailable).

In some embodiments, process 600 can determine that there is sufficient open water near the dock if the amount of unobstructed water pixels near the dock (e.g., water pixels that fall within the dock bounding box and no other bounding box associated with a potentially obstructing object) exceeds a threshold. For example, if the amount (e.g., as a percentage, ratio, etc.) exceeds a threshold, process 600 can determine that the docking position is available at 610.

In some embodiments, process 600 may underestimate the amount of open water near a dock instance that is open due to the perspective from which the image data (e.g., image data received and/or captured at 402) was generated. For example, as shown in FIG. 7, a dock instance can be angled with respect to the camera coordinate system of the imaging device used to capture an image, while the bounding box is drawn based on the camera coordinate system (e.g., such that the sides of the bounding box are parallel to camera coordinate system, regardless of the orientation of the object). In some embodiments, prior to identifying whether there is sufficient open water near a dock instance to safely dock the marine vessel at the dock instance, process 600 can rectify the image such that an edge of the dock is front parallel to the image plane, and can cause the rectified image to be reclassified and/or localized (e.g., to identify at least water and dock instances), and can use classification and/or localization information generated based on the rectified image to determine how much open water is near a dock instance.

Additionally or alternatively, in some embodiments, process 600 can determine whether there is sufficient space for the vessel to dock at the potential docking location. For example, process 600 can determine whether a length of dock that is likely available is sufficient to dock the marine vessel (e.g., whether the length exceeds a threshold based on the length of the vessel). As another process 600 can determine whether a width of the potential docking position is sufficient to dock the marine vessel (e.g., whether a distance from the dock to an adjacent obstacle exceeds a threshold based on the beam of the vessel).

In some embodiments, if, at 610, process 600 determines that at least a threshold amount of open water is near the dock instance, process 600 can determine that the dock instance is available for docking (e.g., that it is unoccupied). For example, the threshold used to determine whether a dock instance is available can be in a range of 60% to 65%. In such an example, the threshold can be higher (e.g., closer to 65%) if the vessel docking is relatively large, and can be lower (e.g., closer to 60%) if the if the vessel docking is relatively small relative to the dock instance. As another example, the threshold can be dynamically adjusted based on a comparison of the size of the dock instance and the vessel being docked. In such an example, the threshold can be higher if the vessel docking is relatively large, and can be lower if the vessel docking is relatively small relative to the dock instance. In some embodiments, the threshold can be set at any suitable value, which can be based on an analysis of empirically gathered data.

In some embodiments, process 600 can update a model of the environment to identify available docking instances using any suitable technique or combination of techniques. For example, process 600 can mark point cloud points corresponding to water pixels identified as available for docking as available for docking. As another example, process 600 can mark a cell of an occupancy grid substantially corresponding to water pixels identified as available for docking (e.g., if a sufficient number of pixels within the cell are water available for docking), as available for docking. In some embodiments, if, at 610, process 600 determines that at least a threshold region of the environment is sufficiently large to accommodate the vessel (e.g., if a relatively contiguous blob of only water points is large enough to accommodate the vessel, or if a contiguous area of an occupancy grid is marked as available for docking), process 600 can determine that an area adjacent to the dock instance is available for docking (e.g., that it is unoccupied). In some embodiments, the size of the area can be set based on the dimensions of the vessel (e.g., length, beam, etc.).

If process 600 determines that there is sufficient open water ("YES" at 612), process 600 can move to 614.

At 614, process 600 can determine that the dock instance is likely available for docking. For example, process 600 can record an area of the environment and/or a model of the environment adjacent to the dock instance as being part of an available docking position.

Otherwise, if process 600 determines that there is not sufficient open water ("NO" at 612), process 600 can move to 616.

At 616, process 600 can determine that the dock instance is unavailable for docking the marine vessel. For example, process 600 can record an area of the environment and/or a model of the environment adjacent to the dock instance as being part of the environment that is not available docking position. In some embodiments, process 600 can omit 616, for example if process 600 is being used to identify available docking positions, which can be used to select a target docking position, process 600 can omit determining that any particular region is unavailable for docking (e.g., positively determining that a docking location is unavailable may not be necessary if a user or autonomy system is constrained to choosing a docking position that has been determined to be available at 614).

FIG. 7 shows an example of an image and classification information generated based on the image in accordance with some embodiments of the disclosed subject matter. As shown in FIG. 7, the classification information can include both information identifying instances of particular classes of objects (e.g., bounding boxes), and information identifying portions of the image with different classes. For example, in FIG. 7 the segmentation information specifies a class for each portion (e.g., each pixel) of a color image. As described above, in some embodiments, the segmentation information can include a mask or set of masks, with each mask and/or each portion of the mask corresponding to a particular class of feature. Additionally, in FIG. 7, two marine vessels in the image are associated with bounding boxes for a vessel class (e.g., in FIG. 7, a "power_boat" class), two portions of a dock structure are associated with bounding boxes for a docks class.

In some embodiments, as described above, mechanisms described herein can determine whether a dock position in an image is likely to be available based on classification information associated with portions of the image. For example, the dock instance on the right side of the image in FIG. 7 is associated with a bounding box that overlaps bounding boxes for the two vessels. As described above (e.g., in connection with 412 of FIG. 4 and 606 of FIG. 6), mechanisms described herein can determine that the dock instance on the right of the image is occupied. Additionally, the vessel to the left dramatically reduces the amount of water visible in the image near the dock instance. Accordingly, it is clear from both the overlap of the bounding boxes and the lack of water pixels (and especially unoccupied water pixels) within the dock bounding box (due at least in part to the composition of the scene and perspective of the camera).

As another example, the dock instance on the left side of the image in FIG. 7 is associated with a bounding box that does not overlap bounding boxes for either of the two vessels (or any other potentially obstructing objects). As described above (e.g., in connection with 412 of FIG. 4 and 606 to 614 of FIG. 6), mechanisms described herein can determine that the dock instance on the left of the image is unoccupied, and can identify a portion of the environment near the dock instance as a position that is available for docking. In such an example, a portion of the environment near the dock instance on the left can be identified as an available docking position (e.g., for potential selection by a user and/or an autonomy system).

### Further Examples Having a Variety of Features

Implementation examples are described in the following numbered clauses:
1. A method for automatically identifying available docking positions using a vision method of a marine vessel, the method comprising: identifying, based on image data captured using an imaging device, a dock instance, wherein the imaging device is configured to be mounted to the marine vessel with an associated field of view of an environment of the marine vessel; determining, based on the image data, whether the dock instance is available for docking; indicating that the dock instance is an available docking position; and causing the marine vessel to maneuver to the available docking position
2. A method for automatically identifying available docking positions using a vision system of a marine vessel, the method comprising: capturing an image using an imaging device, wherein the imaging device is configured to be mounted to the marine vessel with an associated field of view of an environment of the marine vessel; providing the image to a trained object detection model, wherein the trained object detection model is trained to identify instances of objects in image data corresponding to a plurality of classes, including a dock class; receiving, from the trained object detection model, a dock bounding box indicative of a location and size of a dock instance in the image; providing the image data to a trained image segmentation model, wherein the trained image segmentation model is trained to classify each portion of image data as corresponding to a class of a second plurality of classes, including a water class; receiving, from the trained image segmentation model, segmentation information indicative of a portions of the image classified as water; determining that no more than a threshold portion of the dock bounding box overlaps a bounding box of a different class of the plurality of classes; determining, based on the dock bounding box and the segmentation information, that the dock instance is unoccupied; presenting, using a display device, a graphical user interface that includes a model of the marine environment and a selectable user interface element corresponding to the dock instance; receiving, via an input device, a selection of the selectable user interface element; and in response to selection of the selectable user interface element, controlling a marine propulsion system comprising one or more propulsion devices to automatically maneuver the marine vessel to dock at the dock instance without further user intervention
3. The method of any one of clauses 1 or 2, wherein the imaging device comprises a stereoscopic camera
4. The method of any one of clauses 1 to 3, further comprising providing the image data to a trained object detection model, wherein the trained object detection model is trained to identify instances of objects in input image data corresponding to a plurality of classes, including a dock class; receiving, from the trained object detection model, object detection information indicative of a location and size of the dock instance; and identifying the dock instance based on the object detection information
5. The method of any one of clauses 1 to 4, further comprising providing the image data to a trained image segmentation model, wherein the trained image segmentation model is trained to classify each portion of input image data as corresponding to a class of a plurality of classes, including a dock class; receiving, from the trained image segmentation model, segmentation information indicative of a location and size of the dock instance; and identifying the instance dock based on the segmentation information
6. The method of any one of clauses 1 to 5, further comprising identifying, based on the image data captured using the imaging device, a second dock instance; determining whether a dock bounding box associated with the dock instance overlaps one or more non-dock bounding boxes associated with one or more non-dock objects by at least a threshold amount; and in response to determining that the dock bounding box overlaps one or more non-dock bounding boxes by at least the threshold amount, determining that the second dock instance is not available for docking
7. The method of any one of clauses 1 to 6, further comprising determining whether an amount of open water near the dock instance is sufficient for docking the marine vessel; and in response to determining that the amount of open water near the dock instance is sufficient for docking the marine vessel, determining that the dock instance is available for docking
8. The method of clause 7, further comprising identifying a portion of image data within a dock bounding box associated with the dock instance classified as water in segmentation information; determining whether the portion classified as water exceeds a threshold portion of the dock bounding box; and in response to determining that the portion classified as water exceeds the threshold portion of the dock bounding box, determining that the amount of open water near the dock instance is sufficient for docking the marine vessel
9. The method of any one of clauses 1 to 8, further comprising labeling a portion of a model of the marine environment adjacent to the dock instance as available for docking, wherein the portion of the model comprises a portion of the image data that is classified as water and within a dock bounding box associated with the dock instance; and indicating that the dock instance is an available docking position based on the labeled portion of the model
10. The method of clause 9, wherein the model comprises an occupancy grid
11. The method of any one of clauses 9 or 10, further comprising causing a graphical user interface to be presented that includes a user interface element that represents a location of the available docking position with respect to a portion of a dock in the environment that corresponds to the dock instance; receiving, via the graphical user interface, input that causes the available docking position to be selected as a target docking position; and in response to receiving the input that causes the available docking position to be selected, causing the marine vessel to maneuver to the target docking position
12. The method of any one of clauses 1 to 11, further comprising: receiving an indication that the available docking position has been selected as a target docking position; determining a path to the target docking position; determining marine vessel movements to cause the marine vessel to travel along the path; and outputting the marine vessel movements to a marine propulsion system comprising one or more propulsion devices, thereby causing the marine propulsion system to actuate the one or more propulsion devices to propel the marine vessel to the available docking location without further intervention from an operator of the marine vessel.
13. A system comprising: at least one processor that is configured to: perform a method of any of clauses 1 to 12.
14. A non-transitory computer-readable medium storing computer-executable code, comprising code for causing a computer to cause a processor to: perform a method of any of clauses 1 to 12.

In some embodiments, any suitable computer readable media can be used for storing instructions for performing functions and/or processes described herein. For example, in some embodiments, computer readable media can be transitory or non-transitory. For example, non-transitory computer readable media can include media such as magnetic media (such as hard disks, floppy disks, etc.), optical media (such as compact discs, digital video discs, Blu-ray discs, etc.), semiconductor media (such as RAM, Flash memory, electrically programmable read only memory (EPROM), electrically erasable programmable read only memory (EEPROM), etc.), any suitable media that is not fleeting or devoid of any semblance of permanence during transmission, and/or any suitable tangible media. As another example, transitory computer readable media can include signals on networks, in wires, conductors, optical fibers, circuits, or any suitable media that is fleeting and devoid of any semblance of permanence during transmission, and/or any suitable intangible media.

It should be noted that, as used herein, the term mechanism can encompass hardware, software, firmware, or any suitable combination thereof.

It should be understood that above-described steps of the processes of FIGS. 4 to 6 can be executed or performed in any suitable order or sequence not limited to the order and sequence shown and described in the figures. Also, some of the above steps of the processes of FIGS. 4 to 6 can be executed or performed substantially simultaneously where appropriate or in parallel to reduce latency and processing times.

This written description uses examples to disclose the invention(s), including the best mode, and also to enable any person skilled in the art to make and use the invention(s). Certain terms have been used for brevity, clarity, and understanding. No unnecessary limitations are to be inferred therefrom beyond the requirement of the prior art because such terms are used for descriptive purposes only and are intended to be broadly construed. The patentable scope of the invention(s) is defined by the claims and may include other examples that occur to those skilled in the art. Such other examples are intended to be within the scope of the claims if they have features or structural elements that do not differ from the literal language of the claims, or if they include equivalent features or structural elements with insubstantial differences from the literal languages of the claims.

## Claims

1. A system for automatically identifying available docking positions using a vision system of a marine vessel (10), the system comprising:
an imaging device (72, 73, 74, 75, 76, 78),
wherein the imaging device (72, 73, 74, 75, 76, 78) is configured to be mounted to the marine vessel (10) with an associated field of view (92, 93, 94, 95, 96, 98) of an environment (300, 320) of the marine vessel (10); and
one or more hardware processors configured to:
identify, based on image data captured using the imaging device (72, 73, 74, 75, 76, 78), a dock instance;
determine, based on the image data, whether the dock instance is available for docking;
indicate that the dock instance is an available docking position; and
cause the marine vessel (10) to maneuver to the available docking position.

2. The system of claim 1, wherein the one or more hardware processors are further configured to:
provide the image data to a trained object detection model,
wherein the trained object detection model is trained to identify instances of objects in input image data corresponding to a plurality of classes, including a dock class;
receive, from the trained object detection model, object detection information indicative of a location and size of the dock instance; and
identify the dock instance based on the object detection information.

3. The system of claim 1 or 2, wherein the one or more hardware processors are further configured to:
provide the image data to a trained image segmentation model,
wherein the trained image segmentation model is trained to classify each portion of input image data as corresponding to a class of a plurality of classes, including a dock class;
receive, from the trained image segmentation model, segmentation information indicative of a location and size of the dock instance; and
identify the instance dock based on the segmentation information.

4. The system of claim 1, 2 or 3, wherein the one or more hardware processors are further configured to:
identify, based on the image data captured using the imaging device (72, 73, 74, 75, 76, 78), a second dock instance;
determine whether a dock bounding box associated with the dock instance overlaps one or more non-dock bounding boxes associated with one or more non-dock objects by at least a threshold amount; and
in response to determining that the dock bounding box overlaps one or more non-dock bounding boxes by at least the threshold amount, determine that the second dock instance is not available for docking.

5. The system of any one of the preceding claims, wherein the one or more hardware processors are further configured to:
determine whether an amount of open water near the dock instance is sufficient for docking the marine vessel (10); and
in response to determining that the amount of open water near the dock instance is sufficient for docking the marine vessel (10), determine that the dock instance is available for docking;
optionally wherein the one or more hardware processors are further configured to:
identify a portion of image data within a dock bounding box associated with the dock instance classified as water in segmentation information;
determine whether the portion classified as water exceeds a threshold portion of the dock bounding box; and
in response to determining that the portion classified as water exceeds the threshold portion of the dock bounding box, determine that the amount of open water near the dock instance is sufficient for docking the marine vessel (10).

6. The system of any one of the preceding claims, wherein the one or more hardware processors are further configured to:
label a portion of a model of the marine environment (300, 320) adjacent to the dock instance as available for docking,
wherein the portion of the model comprises a portion of the image data that is classified as water and within a dock bounding box associated with the dock instance; and
indicate that the dock instance is an available docking position based on the labeled portion of the model;
optionally wherein the model comprises an occupancy grid; and/or
optionally wherein the one or more hardware processors are further configured to:
cause a graphical user interface to be presented that includes a user interface element that represents a location of the available docking position with respect to a portion of a dock in the environment (300, 320) that corresponds to the dock instance;
receive, via the graphical user interface, input that causes the available docking position to be selected as a target docking position; and
in response to receiving the input that causes the available docking position to be selected, cause the marine vessel (10) to maneuver to the target docking position.

7. The system of any one of the preceding claims, further comprising:
a marine propulsion system (20) comprising one or more propulsion devices (12a, 12b),
wherein the one or more hardware processors are further configured to:
receive an indication that the available docking position has been selected as a target docking position;
determine a path to the target docking position;
determine marine vessel (10) movements to cause the marine vessel (10) to travel along the path; and
output the marine vessel (10) movements to the marine propulsion system (20), thereby causing the marine propulsion system (20) to actuate the one or more propulsion devices (12a, 12b) to propel the marine vessel (10) to the available docking location without further intervention from an operator of the marine vessel (10).

8. The system of any one of the preceding claims, further comprising:
a marine propulsion system (20) comprising one or more propulsion devices (12a, 12b);
a display device (29, 226); and
an input device (28, 228);
wherein the one or more hardware processors are further configured to:
capture an image using the imaging device (72, 73, 74, 75, 76, 78);
provide the image to a trained object detection model,
wherein the trained object detection model is trained to identify instances of objects in image data corresponding to a plurality of classes, including a dock class;
receive, from the trained object detection model, a dock bounding box indicative of a location and size of a dock instance in the image;
provide the image data to a trained image segmentation model,
wherein the trained image segmentation model is trained to classify each portion of image data as corresponding to a class of a second plurality of classes, including a water class;
receive, from the trained image segmentation model, segmentation information indicative of a portions of the image classified as water;
determine that no more than a threshold portion of the dock bounding box overlaps a bounding box of a different class of the plurality of classes;
determine, based on the dock bounding box and the segmentation information, that the dock instance is unoccupied;
present, using the display device (29, 226), a graphical user interface that includes a model of the marine environment (300, 320) and a selectable user interface element corresponding to the dock instance;
receive, via the input device (28, 228), a selection of the selectable user interface element; and
in response to selection of the selectable user interface element, control the marine propulsion system (20) to automatically maneuver the marine vessel (10) to dock at the dock instance without further user intervention.

9. A method for automatically identifying available docking positions using a vision method of a marine vessel (10), the method comprising:
identifying, based on image data captured using an imaging device (72, 73, 74, 75, 76, 78), a dock instance,
wherein the imaging device (72, 73, 74, 75, 76, 78) is configured to be mounted to the marine vessel (10) with an associated field of view (92, 93, 94, 95, 96, 98) of an environment (300, 320) of the marine vessel (10);
determining, based on the image data, whether the dock instance is available for docking;
indicating that the dock instance is an available docking position; and
causing the marine vessel (10) to maneuver to the available docking position.

10. The method of claim 9, further comprising
providing the image data to a trained object detection model,
wherein the trained object detection model is trained to identify instances of objects in input image data corresponding to a plurality of classes, including a dock class;
receiving, from the trained object detection model, object detection information indicative of a location and size of the dock instance; and
identifying the dock instance based on the object detection information.

11. The method of claim 9 or 10, further comprising
providing the image data to a trained image segmentation model,
wherein the trained image segmentation model is trained to classify each portion of input image data as corresponding to a class of a plurality of classes, including a dock class;
receiving, from the trained image segmentation model, segmentation information indicative of a location and size of the dock instance; and
identifying the instance dock based on the segmentation information.

12. The method of claim 9, 10 or 11, further comprising
identifying, based on the image data captured using the imaging device (72, 73, 74, 75, 76, 78), a second dock instance;
determining whether a dock bounding box associated with the dock instance overlaps one or more non-dock bounding boxes associated with one or more non-dock objects by at least a threshold amount; and
in response to determining that the dock bounding box overlaps one or more non-dock bounding boxes by at least the threshold amount, determining that the second dock instance is not available for docking.

13. The method of any one of claims 9-12, further comprising
determining whether an amount of open water near the dock instance is sufficient for docking the marine vessel (10); and
in response to determining that the amount of open water near the dock instance is sufficient for docking the marine vessel (10), determining that the dock instance is available for docking;
optionally further comprising:
identifying a portion of image data within a dock bounding box associated with the dock instance classified as water in segmentation information;
determining whether the portion classified as water exceeds a threshold portion of the dock bounding box; and
in response to determining that the portion classified as water exceeds the threshold portion of the dock bounding box, determining that the amount of open water near the dock instance is sufficient for docking the marine vessel (10).

14. The method of any one of claims 9-13, further comprising
labeling a portion of a model of the marine environment (300, 320) adjacent to the dock instance as available for docking,
wherein the portion of the model comprises a portion of the image data that is classified as water and within a dock bounding box associated with the dock instance; and
indicating that the dock instance is an available docking position based on the labeled portion of the model.

15. The system or method of any one of the preceding claims, wherein the imaging device (72, 73, 74, 75, 76, 78) comprises a stereoscopic camera.
